# FASCICULE DE BREVET EUROPEEN

(11) **EP 4 180 181 B1**
(45) Date de publication et mention de la délivrance du brevet: **18.09.2024**
(21) Numéro de dépôt: 22206596.3
(22) Date de dépôt: 10.11.2022
(51) Int. Cl.: B25B 27/04, B25B 27/14, B25B 31/00, B25B 27/02

(54) **DISPOSITIF DE MONTAGE/DÉMONTAGE D'UNE GOUPILLE DE LIAISON POUR UN ASSEMBLAGE BOUT À BOUT DE DEUX ÉLÉMENTS DE CHARPENTE**
VORRICHTUNG ZUM MONTIEREN/DEMONTIEREN EINES VERBINDUNGSSTIFTS FÜR EINE STOSSVERBINDUNG ZWEIER RAHMENELEMENTE
DEVICE FOR MOUNTING/DISMOUNTING A CONNECTING PIN FOR A BUTT JOINT OF TWO STRUCTURAL ELEMENTS

(30) Priorité: 15.11.2021 FR 2112044
(43) Date de publication de la demande: 17.05.2023
(73) Titulaire: Manitowoc Crane Group France, 69570 Dardilly (FR)
(72) Inventeur: DURAND, Hugues, 38290 SATOLAS et BONCE (FR)
(74) Mandataire: Germain Maureau

(56) Documents cités:
- EP-B1- 0 618 047
- FR-A1- 2 901 166

## Description

### [Domaine technique]

L'invention se rapporte à un dispositif de montage/démontage pour monter/démonter une goupille de liaison employée pour un assemblage bout à bout de deux éléments de charpente d'une structure.

L'invention trouve une application favorite, et non limitative, pour le montage/démontage d'une goupille de liaison employée pour un assemblage bout à bout de deux éléments de charpente d'une structure de grue, et de préférence d'un mât de grue à tour, d'une flèche de grue ou d'une contre-flèche d'une grue.

### [Etat de la technique]

Classiquement, un mât de grue à tour est composé d'une pluralité d'éléments de charpente superposables verticalement, appelés à être assemblés entre eux, bout à bout, lors du montage de la grue sur son site d'exploitation, et à être séparés les uns des autres lors du démontage de la grue.

Les éléments de charpente, habituellement de section transversale carrée, sont constitués de quatre membrures d'angle (ou montants verticaux) qui sont réunies deux à deux par des structures en treillis ou en triangulation, appelées aussi contreventement, composées de diagonales et de traverses. Lors de l'assemblage vertical et bout à bout des éléments de charpente, les extrémités des membrures d'angle de deux éléments de charpente superposés sont rigidement reliées les unes aux autres par des goupilles de liaison (aussi appelées axes de liaison), généralement associés à des éclisses, comme connu par exemple des documents FR3014509A1, FR2781535A1 et FR2680813A1. Le document EP 0 618 047 B1 concerne un dispositif destiné à faciliter le montage et le démontage d'axes qui assurent la liaison entre des éléments de charpente, notamment des éléments d'une charpente métallique.

Les goupilles de liaison présentent des têtes élargies prolongées par des tiges (souvent de forme cylindrique avec une terminaison libre légèrement tronconique), et elles sont généralement rentrées dans les membrures d'angle de l'extérieur vers l'intérieur. Lors du démontage, les goupilles de liaison sont classiquement éjectées ou chassés à coup de masse, en frappant au niveau des extrémités des tiges.

Il existe un besoin de simplifier et également de sécuriser ces opérations de montage/démontage, qui s'effectuent généralement en hauteur, en particulier pour les goupilles de liaison placées au sommet d'un mât de grue, en-dessous d'une partie formant pivot fixe, car cette localisation sous le pivot fixe est contraignante pour les monteurs et rend ainsi les opérations risquées.

Le brevet EP0618047B1 propose un outillage pour monter/démonter une goupille de liaison, mettant en oeuvre un système de vérin pneumatique ou hydraulique. Une telle solution présente cependant l'inconvénient de faire appel à un outillage dédié, spécialement conçu pour de telles opérations, limitant ainsi son usage. Par ailleurs, il fait appel à une source hydraulique ou pneumatique reliée à l'outillage par des flexibles adéquat, limitant la portée d'utilisation et impliquant des risques inhérents à l'emploi de flexibles susceptibles de se coincer et alourdissant la charge pour le monteur.

### [Résumé de l'invention]

L'invention propose de répondre au problème de faciliter et sécuriser les opérations de montage/démontage des goupilles de liaison, tout en offrant une solution qui soit à la fois pratique et économique.

Ainsi, l'invention propose un dispositif de montage/démontage pour monter/démonter une goupille de liaison employée pour un assemblage bout à bout de deux éléments de charpente d'une structure, comme par exemple une structure de grue, ce dispositif de montage/démontage comprenant :
- une tige de montage/démontage présentant un axe longitudinal, une tête adaptée pour coopérer avec une visseuse, et un corps de tige présentant une partie proximale prolongeant la tête et une partie distale filetée qui se termine par une extrémité libre ;
- un bâti supportant un écrou et présentant une partie formant butée conformée pour prendre appui sur l'un des deux éléments de charpente, la partie distale filetée étant prévue pour se visser dans l'écrou aligné sur l'axe longitudinal ;
- une butée proximale montée libre en rotation sur la partie proximale du corps de tige autour de l'axe longitudinal ;
- une douille qui est amovible et montée libre en translation le long de l'axe longitudinal autour du corps de tige entre l'écrou et la butée proximale, une telle douille présentant une première extrémité ouverte et une seconde extrémité ouverte ;
ce dispositif de montage/démontage étant configurable dans :
- une configuration de montage dans laquelle la douille est en butée contre la butée proximale ; et
- une configuration de démontage dans laquelle la douille est en butée contre le bâti ou l'écrou.

Ainsi, l'invention propose un dispositif de montage/démontage qui forme un ensemble mécanique prêt à être utilisé avec une visseuse (aussi appelée boulonneuse) pour monter/démonter les goupilles de liaison, permettant ainsi de travailler avec une visseuse du commerce, ce qui est particulièrement économique car seul le dispositif de montage/démontage est spécialement conçu pour de telles opérations, alors que l'actionneur, à savoir la visseuse, est classique, et de surcroît est largement employé chez les monteurs qui sont amenés à effectuer de nombreuses opérations de vissage/dévissage.

De cette manière, le montage et le démontage de la goupille de liaison se font avec la visseuse et avec le même dispositif de montage/démontage, mais avec des agencements différents de la douille selon que l'on est en configuration de montage ou en configuration de démontage. Dans les deux cas la visseuse doit simplement visser pour mener à bien l'opération et, une fois l'opération terminée, il suffit de dévisser pour pouvoir retirer le dispositif de montage/démontage.

En effet, et comme décrit ultérieurement, les opérations se déroulent succinctement comme suit, grâce à l'invention :
- lors d'un montage, la tige de montage/démontage se visse dans l'écrou, de sorte que l'écrou pousse la goupille de liaison, les efforts rotationnel étant repris sur la structure par la partie formant butée du bâti et la douille étant coincée entre la structure et la butée proximale, conduisant ainsi à un enfoncement de la goupille de liaison au travers des deux éléments de charpente, ladite goupille de liaison finissant son enfoncement en entrant partiellement à l'intérieur de la douille placée du côté de la visseuse ;
- lors d'un démontage, la tige de montage/démontage se visse dans l'écrou, de sorte que la butée proximale pousse la goupille de liaison, les efforts rotationnel étant repris sur la structure par la partie formant butée du bâti et la douille étant coincée entre la structure et l'écrou, conduisant ainsi à une extraction de la goupille de liaison hors des deux éléments de charpente, ladite goupille de liaison finissant son dégagement en entrant partiellement à l'intérieur de la douille placée du côté opposé à celui de la visseuse

Par ailleurs, l'invention permet de travailler avec une visseuse autonome fonctionnant sur batterie, ce qui évite des problématiques de câble ou de flexible, sécurisant ainsi les opérations de montage/démontage.

Il est à noter que, dans la configuration de démontage, la douille peut être en butée directement contre l'écrou, ou peut-être en butée contre le bâti dans l'alignement de l'écrou, de sorte à être en butée contre une partie du bâti qui se situe entre l'écrou et la douille. En tout cas, dans la configuration de démontage, la douille se trouve entre l'écrou et la tête élargie de la goupille de liaison.

Dans une réalisation de l'invention, le bâti comprend un manchon de support aligné sur l'axe longitudinal et présentant une extrémité proximale ouverte et une extrémité distale ouverte opposées, ce manchon de support supportant intérieurement l'écrou, et dans lequel :
- dans la configuration de montage, l'écrou est bloqué en rotation et est guidée en translation le long de l'axe longitudinal ;
- dans la configuration de démontage, l'écrou est bloqué en rotation et est bloqué en translation le long de l'axe longitudinal.

Dans cette réalisation, l'écrou est déplaçable entre deux configurations distinctes, car dans la phase de montage c'est l'écrou qui se déplace axialement le long de l'axe longitudinal tandis que la visseuse reste fixe axialement, alors que dans la phase de montage c'est la visseuse qui se déplace axialement le long de l'axe longitudinal tandis que l'écrou reste fixe axialement.

Selon une possibilité, au moins une rainure longitudinale est ménagée sur le manchon de support, cette rainure longitudinale s'étendant parallèlement à l'axe longitudinal, et l'écrou est solidaire d'au moins un pion de guidage qui, dans la configuration de montage, est engagé dans la rainure longitudinale correspondante pour bloquer l'écrou en rotation et guider l'écrou en translation le long de l'axe longitudinal.

De cette manière, l'écrou peut coulisser le long de la rainure longitudinale, ou des rainures longitudinales, durant le montage au fur et à mesure du vissage de la tige de montage/démontage dans l'écrou.

Selon une autre possibilité, l'au moins une rainure longitudinale est prolongée, du côté de l'extrémité distale ouverte du manchon de support, par une rainure circonférentielle qui se poursuit par une rainure de verrouillage ayant une forme générale en « L » pour que, dans la configuration de démontage, l'au moins un pion de guidage est engagé dans la rainure de verrouillage pour bloquer l'écrou en rotation et en translation le long de l'axe longitudinal.

Ainsi, lorsque le pion de guidage est coincé dans le fond de la rainure de verrouillage, il est bloqué en rotation (avec éventuellement une tolérance angulaire) et bloqué en translation longitudinale, pour permettre l'opération de démontage.

Selon une autre possibilité, le bâti comprend une paroi proximale, solidaire de l'extrémité proximale du manchon de support, une telle paroi proximale présentant un relief d'appui qui forme la partie formant butée conformée pour prendre appui sur l'un des deux éléments de charpente.

Ainsi, l'appui, et donc la reprise des efforts rotationnels, sur la structure se fait au niveau de la paroi proximale et donc de relief d'appui.

Avantageusement, le relief d'appui se présente sous la forme de deux butées linéaires en vis-à-vis, délimitant entre elles une encoche dans laquelle débouche l'extrémité proximale du manchon de support.

Cette encoche est dimensionnée pour enchâsser l'un des deux éléments de charpente, et ainsi se coincer sur ce dernier pour bloquer en rotation le bâti. Il est bien entendu envisageable de prévoir d'autres types de relief d'appui, comme par exemple un bras en porte-à-faux qui viendra buter latéralement sur l'un des deux éléments de charpente et ainsi bloquer en rotation le bâti durant les phases de vissage de la tige de montage/démontage.

Selon une autre possibilité, le bâti comprend un système de maintien monté sur l'extrémité distale du manchon de support et coopérant avec l'extrémité libre du corps de tige de la tige de montage/démontage dans la configuration de montage, pour bloquer axialement le corps de tige le long de l'axe longitudinal.

Ce système de maintien, qui peut par exemple se présenter sous la forme d'un verrou mécanique (comme par exemple un clip de maintien) a pour fonction de maintenir le manchon de support (et donc le bâti) sur la tige de montage/démontage en phase de montage, l'écrou se déplaçant quant à lui à l'intérieur du manchon de support qui reste fixe.

Selon une autre possibilité, le bâti comprend un ou plusieurs aimants disposés sur la partie formant butée pour un maintien par aimantation du bâti sur l'un des deux éléments de charpente.

Il est ainsi envisageable de prévoir un ou plusieurs aimants sur la partie formant butée (ou sur le relief d'appui décrit ci-dessus), afin de permettre le maintien par aimantation du bâti sur l'un des deux éléments de charpente, ce qui assure aussi le maintien en place du bâti sur la tige de montage/démontage.

Dans une variante de réalisation, le bâti comprend un berceau ayant une forme générale en arche et muni d'un plateau proximal et d'un plateau distal en vis-à-vis et reliés par un longeron, ce longeron formant la partie formant butée conformée pour prendre appui sur l'un des deux éléments de charpente.

Dans cette variante de réalisation, la reprise des efforts rotationnels se fait au niveau du longeron, qui s'étend entre le plateau proximal et le plateau distal qui sont disposés de part et d'autre des deux éléments de charpente, et donc de part et d'autre de la goupille de liaison.

Selon une possibilité, le plateau proximal et le plateau distal comprennent respectivement un orifice proximal et un orifice distal alignés sur l'axe longitudinal, cet orifice distal étant solidaire de l'écrou, et dans lequel la butée proximale et la douille sont adaptées pour passer à l'intérieur de l'orifice proximal du berceau.

Selon une autre possibilité, le plateau proximal du berceau supporte un tube proximal définissant intérieurement l'orifice proximal, la butée proximale et la douille étant adaptées pour coulisser à l'intérieur dudit tube proximal.

Ce tube proximal forme ainsi un guide axial, à la fois pour la douille (en configuration de montage) et pour la butée proximale, guidant ainsi la phase de vissage de la tige de montage/démontage.

Selon une autre possibilité, le plateau distal supporte, sur une face interne en regard du plateau proximal, une couronne entourant l'orifice proximal et qui est adapté pour recevoir intérieurement soit une tête élargie de la goupille de liaison dans la configuration de montage, soit la seconde extrémité ouverte de la douille dans la configuration de démontage.

Une telle couronne permet de bloquer radialement la goupille de liaison ou la douille, selon que l'on est en opération de montage ou de démontage. Cette couronne, qui peut être solidaire de l'écrou, fait ainsi office de guide pour la goupille de liaison au montage et pour la douille au démontage.

Selon une caractéristique, la douille est solidaire d'un bras d'extension radiale adaptée pour s'engager dans une fenêtre ménagée dans le longeron du berceau, afin de bloquer en rotation ladite douille.

Un tel bras d'extension radiale offre ainsi une reprise de couple au niveau de la douille.

Selon une autre caractéristique, le bras d'extension radiale est munie d'une extrémité libre coopérant avec un organe de verrouillage, comme par exemple une goupille, pour verrouiller le bras d'extension radiale dans la fenêtre du longeron.

Ainsi, cet organe de verrouillage permet d'éviter la chute de la douille, en particulier lors du démontage.

Dans un mode de réalisation particulier, la butée proximale est bloquée en translation le long de la partie proximale du corps de tige, contre la tête de la tige de montage/démontage.

Selon une autre possibilité, la partie proximale du corps de tige présente une gorge circonférentielle, et la butée proximale est bloquée en translation au moyen de deux goupilles qui traversent ladite butée proximale pour s'engager dans la gorge circonférentielle, par exemple de manière diamétralement opposée par rapport à l'axe longitudinal.

De telles goupilles permettent de solidariser la butée proximale, sans empêcher la rotation du corps de tige (de préférence sans frottement du fait d'un jeu dans la gorge circonférentielle), et elles permettent aussi de retirer la butée proximale si celle-ci se trouve coincée dans la structure.

Dans une réalisation particulière, la butée proximale est guidée en rotation par un organe de roulement monté autour de la partie proximale du corps de tige.

Avantageusement, l'organe de roulement est interposé entre une butée annulaire, qui est en appui contre la tête de la tige de montage/démontage, et un épaulement interne prévu dans la butée proximale.

Selon une caractéristique, la butée annulaire présente une face arrière concave de forme hémisphérique et qui est en appui sur une portée hémisphérique de la tête de la tige de montage/démontage.

L'invention se rapporte également à un système de montage/démontage pour monter/démonter une goupille de liaison employée pour un assemblage bout à bout de deux éléments de charpente d'une structure, comme par exemple une structure de grue, ce système de montage comprenant :
- un dispositif de montage/démontage selon l'invention ; et
- une visseuse, par exemple une visseuse à percussion, munie d'un embout apte à coopérer avec la tête de la tige de montage/démontage, pour pouvoir entraîner en rotation ladite tige de montage/démontage.

L'invention concerne aussi un kit d'assemblage pour un assemblage bout à bout de deux éléments de charpente d'une structure, comme par exemple une structure de grue, ce kit d'assemblage comprenant :
- un dispositif de montage/démontage selon l'invention ; et
- au moins une goupille de liaison adaptée pour traverser des trous de liaison prévus dans les deux éléments de charpente en superposition ;
dans lequel la goupille de liaison est de forme tubulaire pour pouvoir être traversée par la tige de montage/démontage et présente une tête élargie.

Selon une possibilité, la première extrémité ouverte de la douille est dimensionnée pour laisser entrer au moins partiellement la goupille de liaison à l'intérieur de la douille, selon un premier sens d'insertion avec l'extrémité proximale de la goupille de liaison qui entre dans la première extrémité ouverte de la douille, et aussi selon un second sens d'insertion avec l'extrémité distale et la tête élargie de la goupille de liaison qui entrent dans la première extrémité ouverte de la douille.

L'invention porte aussi sur un procédé de montage pour monter une goupille de liaison employée pour un assemblage bout à bout de deux éléments de charpente d'une structure, comme par exemple une structure de grue, ledit procédé de montage comprenant une fourniture d'un dispositif de montage/démontage selon l'invention, dans lequel :
- la goupille de liaison, de forme tubulaire, est positionnée dans un trou de liaison traversant les deux éléments de charpente en superposition, et cette goupille de liaison présente une extrémité distale munie d'une tête élargie et une extrémité proximale opposées, ladite tête élargie étant disposée sur un premier côté de la structure, par exemple un côté extérieur ;
- la douille est montée autour du corps de tige, sur un second côté de la structure, opposé au premier côté de la structure, avec sa seconde extrémité ouverte qui est placée en butée contre la butée proximale ;
- le bâti est mis en place sur la structure avec l'écrou disposé sur le premier côté de la structure en alignement avec la goupille de liaison, dont la tête élargie est placée en butée contre l'écrou ou le bâti ;
- la tige de montage/démontage est enfoncée et traverse les deux éléments de charpente et la goupille de liaison jusqu'à ce que la partie distale filetée vienne au contact de l'écrou supporté par le bâti, et que la douille soit en appui contre l'un des deux éléments de charpente sur le second côté de la structure ;
- la tête de la tige de montage/démontage est accouplée à un embout d'une visseuse, par exemple une visseuse à percussion, qui est située sur le second côté de la structure ;
- la visseuse est activée pour visser la partie distale filetée dans l'écrou, conduisant à un déplacement axial de l'écrou selon un sens allant du premier côté en direction du second côté de la structure, et donc aussi à un déplacement axial de la goupille de liaison qui s'engage au travers des deux éléments de charpente, et où durant le vissage la partie formant butée du bâti est en appui sur l'un des deux éléments de charpente afin de bloquer en rotation le bâti et l'écrou ;
- une fois la tête élargie de la goupille de liaison en butée contre l'un des deux éléments de charpente, la visseuse est activée en sens inverse pour dévisser la partie distale filetée hors de l'écrou et ensuite retirer le dispositif de montage/démontage.

L'invention porte également sur un procédé de démontage pour démonter une goupille de liaison employée pour un assemblage bout à bout de deux éléments de charpente d'une structure, comme par exemple une structure de grue, ledit procédé de démontage comprenant une fourniture d'un dispositif de montage/démontage selon l'invention, dans lequel :
- la goupille de liaison, de forme tubulaire, est montée au travers des deux éléments de charpente en superposition afin de les assembler, et cette goupille de liaison présente une extrémité distale munie d'une tête élargie et une extrémité proximale opposées, ladite tête élargie étant disposée sur un premier côté de la structure, par exemple un côté extérieur ;
- le bâti est mis en place sur la structure avec l'écrou disposé sur le premier côté de la structure en alignement avec la goupille de liaison, et avec la douille qui est montée sur le bâti, sur le premier côté de la structure, et qui est interposé entre l'écrou et l'un des deux éléments de charpente, la première extrémité ouverte de la douille entourant la tête élargie de la goupille de liaison ;
- la tige de montage/démontage est enfoncée et traverse la goupille de liaison et la douille jusqu'à ce que la partie distale filetée vienne au contact de l'écrou ;
- la tête de la tige de montage/démontage est accouplée à un embout d'une visseuse, par exemple une visseuse à percussion, qui est située sur un second côté de la structure, opposé au premier côté de la structure ;
- la visseuse est activée pour visser la partie distale filetée dans l'écrou, conduisant à un déplacement axial de la butée proximale qui vient en butée contre l'extrémité proximale de la goupille de liaison, poussant ainsi axialement la goupille de liaison selon un sens allant du second côté en direction du premier côté de la structure, pour que la goupille de liaison sorte au moins partiellement des deux éléments de charpente tout en entrant à l'intérieur de la douille ;
- une fois la butée proximale en butée contre l'un des deux éléments de charpente, la visseuse est activée en sens inverse pour dévisser la partie distale filetée hors de l'écrou et ensuite retirer le dispositif de montage/démontage.

### [Brève description des figures]

D'autres caractéristiques et avantages de la présente invention apparaîtront à la lecture de la description détaillée ci-après, de deux exemples de mise en oeuvre non limitatif, faite en référence aux figures annexées dans lesquelles :
[Fig 1] est une vue schématique en perspective de deux éléments de charpente d'une structure de grue, en l'occurrence un élément de mât et un élément de pivot fixe, avec une illustration de goupilles de liaison permettant leur assemblage ;
[Fig 2] est une vue schématique en perspective d'un premier dispositif de montage/démontage selon l'invention, en configuration de démontage, accouplé à une visseuse ;
[Fig 3] est une vue schématique en perspective et en coupe axiale du premier dispositif de montage/démontage, en configuration de démontage, accouplé à la visseuse ;
[Fig 4] est une vue schématique en perspective d'une douille, selon deux angles de vue, pour le premier dispositif de montage/démontage ;
[Fig 5] est une vue schématique en perspective, selon deux angles de vue, d'un bâti réalisé sous la forme d'un berceau pour le premier dispositif de montage/démontage ;
[Fig 6] est une vue schématique d'une goupille de liaison adaptée pour l'invention ;
[Fig 7] est une vue schématique en perspective et en éclatée d'un ensemble comprenant une tige de montage/démontage, une butée annulaire, un organe de roulement et une butée proximale, pour le premier dispositif de montage/démontage, et aussi pour le deuxième et le troisième dispositifs de montage/démontage ;
[Fig 8] est une vue schématique en perspective du premier dispositif de montage/démontage, en configuration de montage, accouplé à la visseuse, et en situation sur la structure de la Figure 1 ;
[Fig 9] est une vue schématique en coupe axiale du premier dispositif de montage/démontage, en configuration de montage et au début de l'opération de montage, en situation sur la structure avec la goupille de liaison à monter ;
[Fig 10] est une vue schématique équivalente à celle de la Figure 9, à la fin de l'opération de montage et avec la goupille de liaison qui est montée ;
[Fig 11] est une vue schématique en coupe axiale du premier dispositif de montage/démontage, en configuration de démontage et au début de l'opération de démontage, en situation sur la structure avec la goupille de liaison à démonter ;
[Fig 12] est une vue schématique équivalente à celle de la Figure 11, à la fin de l'opération de démontage et avec la goupille de liaison qui est partiellement démontée ;
[Fig 13] est une vue schématique en perspective du premier dispositif de montage/démontage qui est stocké sur le dessous de l'élément de pivot fixe de la structure de grue de la Figure 1, avec plusieurs goupilles de liaison ;
[Fig 14] est une vue schématique en perspective d'un deuxième dispositif de montage/démontage selon l'invention, en configuration de démontage ;
[Fig 15] est une vue schématique en coupe axiale du deuxième dispositif de montage/démontage, en configuration de montage et au début de l'opération de montage, en situation sur la structure avec la goupille de liaison à monter ;
[Fig 16] est une vue schématique équivalente à celle de la Figure 15, à la fin de l'opération de montage et avec la goupille de liaison qui est montée ;
[Fig 17] est une vue schématique en coupe axiale du deuxième dispositif de montage/démontage, en configuration de démontage et au début de l'opération de démontage, en situation sur la structure avec la goupille de liaison à démonter ;
[Fig 18] est une vue schématique équivalente à celle de la Figure 17, à la fin de l'opération de démontage et avec la goupille de liaison qui est partiellement démontée ;
[Fig 19] est une vue schématique en perspective d'un troisième dispositif de montage/démontage selon l'invention, en configuration de montage ;
[Fig 20] est une vue schématique en perspective du troisième dispositif de montage/démontage selon l'invention, en configuration de montage, accouplé à une visseuse ;
[Fig 21] est une vue schématique en perspective, selon deux angles de vue, d'un bâti comprenant un manchon de support, pour le troisième dispositif de montage/démontage ;
[Fig 22] est une vue schématique en perspective d'une douille, selon deux angles de vue, pour le troisième dispositif de montage/démontage ;
[Fig 23] est une vue schématique en coupe axiale du troisième dispositif de montage/démontage, en configuration de montage et au début de l'opération de montage, en situation sur la structure avec la goupille de liaison à monter ;
[Fig 24] est une vue schématique équivalente à celle de la Figure 23, à la fin de l'opération de montage et avec la goupille de liaison qui est montée ;
[Fig 25] est une vue schématique en coupe axiale du troisième dispositif de montage/démontage, en configuration de démontage et au début de l'opération de démontage, en situation sur la structure avec la goupille de liaison à démonter ;
[Fig 26] est une vue schématique équivalente à celle de la Figure 25, à la fin de l'opération de démontage et avec la goupille de liaison qui est partiellement démontée.

### [Description détaillée d'un ou plusieurs modes de réalisation de l'invention]

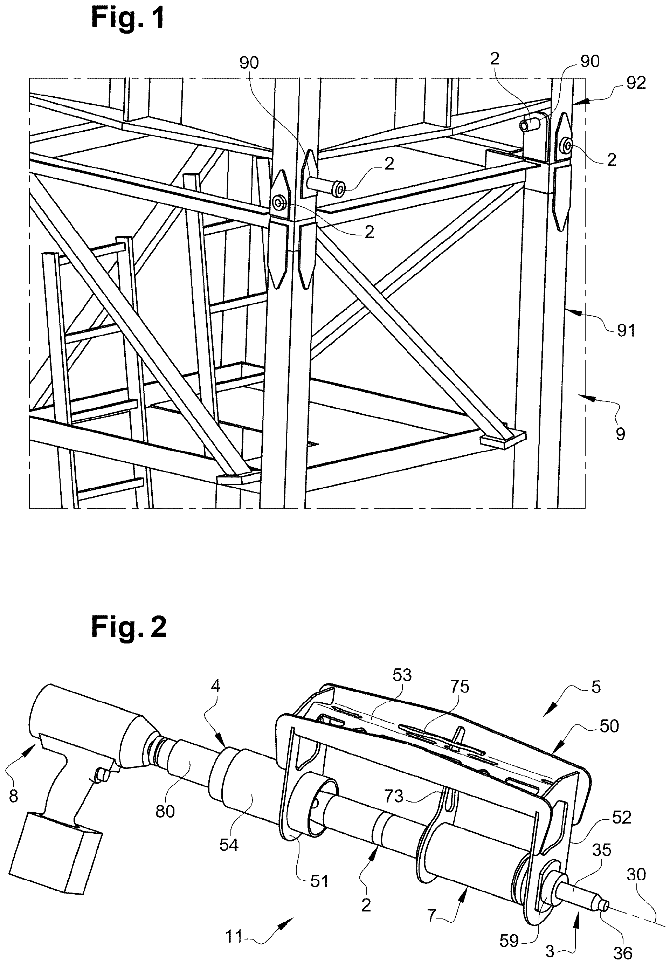

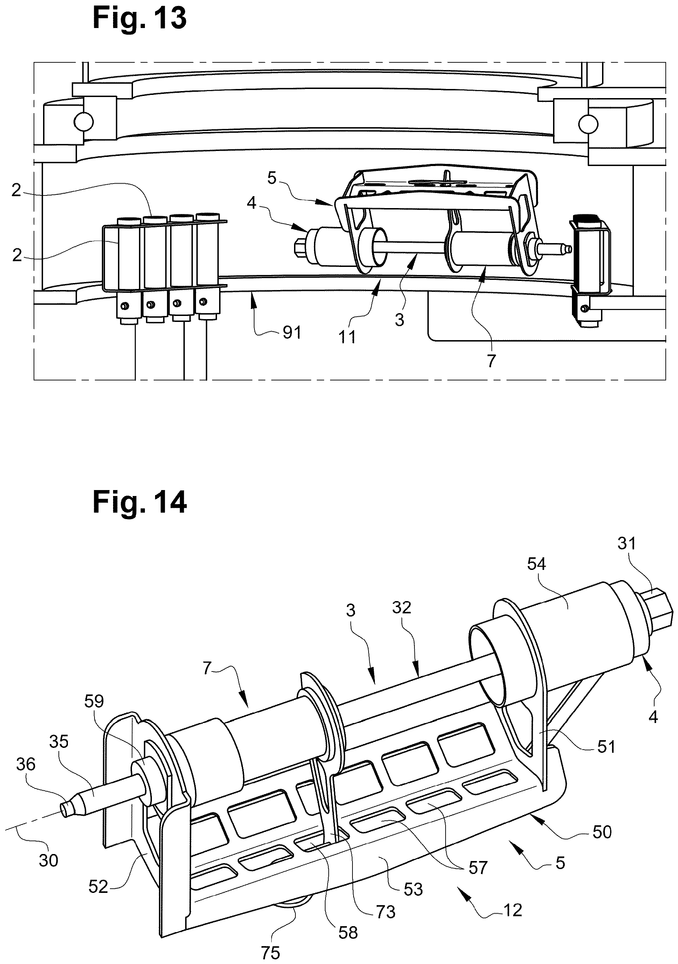

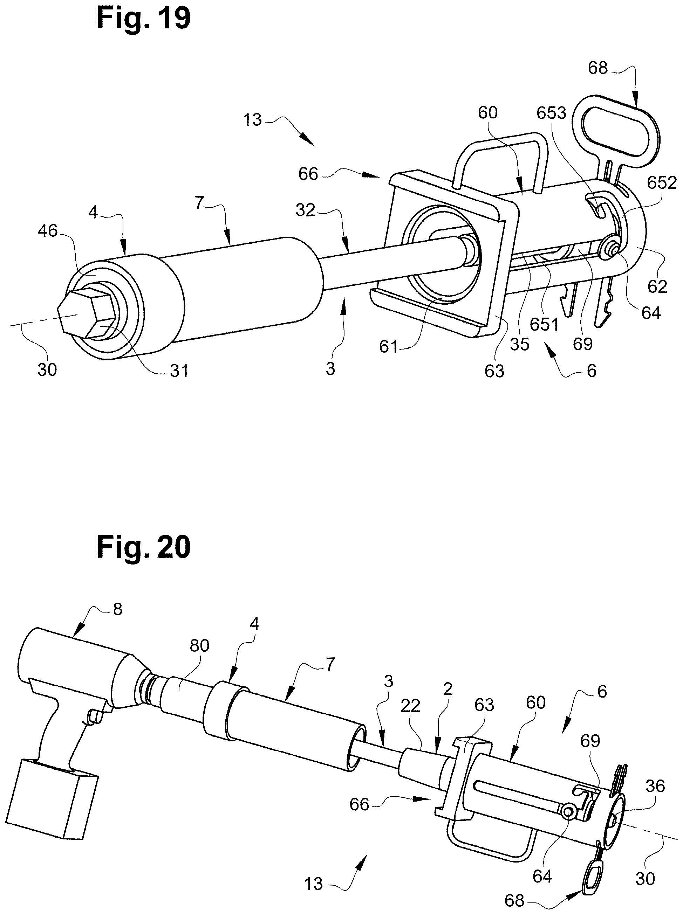

Les Figures 2 à 5 et 7 à 13 se rapportent à un premier dispositif de montage/démontage 11 conforme à l'invention, les Figures 14 à 18 se rapportent à un deuxième dispositif de montage/démontage 12 conforme à l'invention et les Figures 19 à 26 se rapportent à un troisième dispositif de montage/démontage 13 conforme à l'invention. Pour la suite de la description, les mêmes références numériques seront généralement employées pour les éléments structurels ou fonctionnels qui sont identiques ou similaires dans les trois dispositifs de montage/démontage 11, 12, 13.

Chacun des dispositifs de montage/démontage 11, 12, 13 a pour fonction de permettre de monter/démonter une goupille de liaison 2 employée pour un assemblage bout à bout de deux éléments de charpente 91, 92 d'une structure 9, comme par exemple une structure de grue. Comme décrit plus en détail ultérieurement, chacun des dispositifs de montage/démontage 11, 12, 13 est configurable réversiblement entre deux configurations distinctes :
- une configuration de montage utilisée lors du montage de la goupille de liaison 2 ; et
- une configuration de démontage utilisée lors du démontage de la goupille de liaison 2 ;
de sorte qu'un opérateur adapte la configuration en fonction du besoin.

La Figure 1 illustre un exemple de structure 9 qui se présente sous la forme d'une structure verticale, comme par exemple un mât (aussi appelé tour ou pylône) d'une grue à assemblage par éléments ou d'une grue à tour. L'un des deux éléments de charpente 91, celui du dessous, est un élément de mâture qui comprend des membrures d'angle (ou montants verticaux) qui sont réunies deux à deux par des structures en treillis ou en triangulation composées de diagonales et de traverses. L'autre des deux éléments de charpente 92 est une partie formant pivot fixe, placée au-dessus de l'élément de charpente 91 et donc au sommet du mât, où cet élément de charpente 92 comprend également des membrures d'angle (ou montants verticaux).

Lors de l'assemblage vertical et bout à bout des deux éléments de charpente 91, 92, les extrémités supérieures des membrures d'angle de l'élément de charpente 91 et les extrémités inférieures des membrures d'angle de l'élément de charpente 92 sont superposées et sont rigidement reliées les unes aux autres par des goupilles de liaison 2, avec par exemple deux goupilles de liaison 2 pour chaque paire de membrures d'angle en superposition.

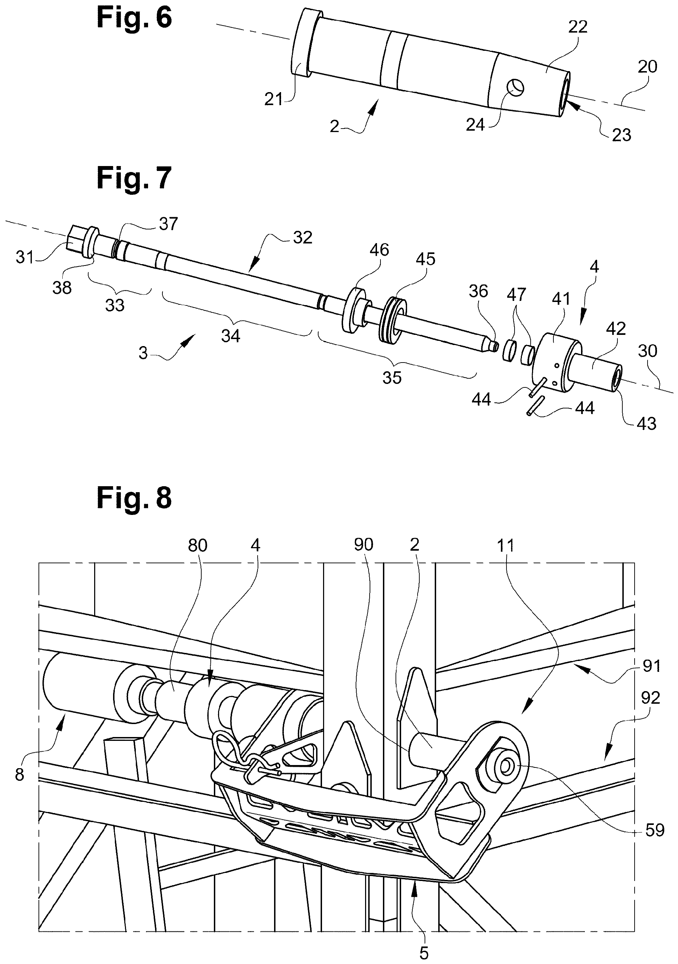

La Figure 6 illustre un exemple de goupille de liaison 2 qui est adaptée pour chacun des trois dispositifs de montage/démontage 11, 12, 13. Une telle goupille de liaison 2 présente une forme tubulaire, centré sur un axe principal 20, et elle présente une extrémité distale munie d'une tête élargie 21 et une extrémité proximale 22 opposées. Du fait de sa forme tubulaire, la goupille de liaison 2 présente sur toute sa longueur un canal interne 23 qui débouche à la fois sur la tête élargie 21 et sur l'extrémité proximale 22. L'extrémité proximale 22 peut être de forme tronconique, et la goupille de liaison 2 peut être de forme cylindrique entre la tête élargie 21 et l'extrémité proximale 22. Un trou transversal 24 peut être ménagé au niveau de l'extrémité proximale 22 pour permettre le passage d'un goujon de sécurité. Cette goupille de liaison 2, creuse, est réalisée dans un matériau métallique, et par exemple en acier.

Lors de son montage, la goupille de liaison 2 est insérée dans un trou de liaison 90 qui traverse les deux éléments de charpente 91, 92 en superposition, où c'est l'extrémité proximale 22 de la goupille de liaison 2 qui entre en premier. La goupille de liaison 2 est montée lorsque la tête élargie 21 vient en butée contre l'un des deux éléments de charpente 91, 92. Lors du montage, la goupille de liaison 2 est insérée depuis un premier côté de la structure 9, par exemple un côté extérieur dans l'exemple de la Figure 1, de sorte qu'à la fin du montage la tête élargie 21 est disposée sur ce premier côté de la structure 9, tandis que l'extrémité proximale 22 dépasse sur un second côté de la structure 9, opposé au premier côté, ce second côté étant donc un côté intérieur dans l'exemple de la Figure 1. Ainsi, dans l'exemple de la Figure 1, la goupille de liaison 2 est insérée depuis l'extérieur vers l'intérieur ; étant noté qu'il est envisageable en variante d'insérer la goupille de liaison 2 depuis l'intérieur vers l'extérieur. Le premier côté et le second côté sont définis par rapport à l'axe du trou de liaison 90, et sont disposés de part et d'autre des deux éléments de charpente 91, 92 le long de cet axe du trou de liaison 90.

Chacun des dispositifs de montage/démontage 11, 12, 13 comprend une tige de montage/démontage 3 qui est illustrée seule sur la Figure 7. Cette tige de montage/démontage 2 est adaptée pour les trois dispositifs de montage/démontage 11, 12, 13.

Cette tige de montage/démontage 3 présente un axe longitudinal 30, qui sera l'axe de référence dans la suite de description, et qui définit la longueur de la tige de montage/démontage 3. En situation, cet axe longitudinal 30 est confondu ou sensiblement confondu avec l'axe du trou de liaison 90 à l'intérieur duquel est insérée la goupille de liaison 2, et donc cet axe longitudinal 30 est également confondu ou sensiblement confondu avec l'axe principal 20 de la goupille de liaison 2.

Cette tige de montage/démontage 3 présente une tête 31 adaptée pour coopérer avec une visseuse 8, et un corps de tige 32 présentant successivement le long de l'axe longitudinal 30 :
- une partie proximale 33 prolongeant la tête 31 ;
- une partie centrale 34 lisse ; et
- une partie distale filetée 35 qui se termine par une extrémité libre 36.

La partie proximale 33 présente une gorge circonférentielle 37, décalée axialement par rapport à la tête 31. La tête 31 est conformée pour être accouplée à un embout 80 de la visseuse 8, par exemple par coopération de forme, pour que la visseuse 8 puisse entraîner en rotation la tige de montage/démontage 3 autour de l'axe longitudinal 30. La tête 31 se présente par exemple sous la forme d'une tête hexagonale, et l'embout 80 de la visseuse 8 sous la forme d'un embout creux hexagonale. En cas défaillance de la visseuse 8, il sera ainsi possible d'utiliser une clé manuelle pour faire tourner la tige de montage/démontage 3.

La tige de montage/démontage 3 est adaptée pour coulisser à l'intérieur de la goupille de liaison 2, dans son canal interne 23, et même traverser de part en part, toute sa longueur, la goupille de liaison 2 ; l'extrémité libre 36 de la tige de montage/démontage 3 entrant en premier dans le canal interne 23.

Chacun des dispositifs de montage/démontage 11, 12, 13 comprend également une butée proximale 4 montée libre en rotation sur la partie proximale 33 du corps de tige 32 autour de l'axe longitudinal 30. La butée proximale 4 est bloquée en translation le long de la partie proximale 33 du corps de tige 32, contre la tête 31 de la tige de montage/démontage 3. Autrement dit, la butée proximale 4 reste en place contre la tête 31 et peut uniquement tourner.

La butée proximale 4 est traversé sur toute sa longueur par le corps de tige 32 et présente une extrémité distale 43 formant butée d'arrêt comme décrit ultérieurement. Cette butée proximale 4 comprend une section proximale 41 cylindrique et en butée contre la tête 31, et une section distale 42 cylindrique qui prolonge la section proximale 41 et qui termine par l'extrémité distale 43. La section distale 42 présente un diamètre inférieur à celui de la section proximale 41.

La butée proximale 4 est bloquée en translation au moyen de deux goupilles 44 rectilignes qui traversent la butée proximale 4, et plus précisément la section proximale 41, pour s'engager dans la gorge circonférentielle 37 de la partie proximale 33 du corps de tige 32, de manière diamétralement opposée par rapport à l'axe longitudinal 30.

Par ailleurs, la butée proximale 4 est guidée en rotation par un organe de roulement 45, comme par exemple une butée à rouleaux, une butée à billes ou une butée à aiguilles, où cet organe de roulement 45 est monté autour de la partie proximale 33 du corps de tige 32, à l'intérieur d'un palier interne ménagé dans la butée proximale 4, et plus précisément dans la section proximale 41. Cet organe de roulement 45 permet de réduire les frottements entre la butée proximale 4 et la tige de montage/démontage 3 lorsque celle-ci tourne.

Cet organe de roulement 45 est interposé entre une butée annulaire 46, comme par exemple une butée à rotule, qui est en appui contre la tête 31 de la tige de montage/démontage 3, et un épaulement interne prévu dans le palier interne de la butée proximale 4. Cette butée annulaire 46 présente une face arrière concave de forme hémisphérique et qui est en appui sur une portée hémisphérique 38 de la tête 31 de la tige de montage/démontage 3.

Un ou deux paliers lisses 47 peuvent également être interposés entre la section distale 42 et la partie proximale 33 du corps de tige 32, pour réduire les frottements.

Les goupilles 44 permettent ainsi de solidariser la butée proximale 4, l'organe de roulement 45 et la butée annulaire 46, sans empêcher la rotation de la tige de montage/démontage 3, car les goupilles 44 sont montées avec un jeu dans la gorge circonférentielle 37. Ces goupilles 44 permettent aussi de retirer la butée proximale 4 si celle-ci se trouve coincée dans la structure 9.

Chacun des dispositifs de montage/démontage 11, 12, 13 comprend un bâti 5, 6 supportant un écrou 59, 69 et présentant une partie formant butée conformée pour prendre appui sur l'un des deux éléments de charpente 91, 92. En situation, la partie distale filetée 35 du corps de tige 32 de tige de montage/démontage 3 est prévue pour se visser dans l'écrou 59, 69 aligné sur l'axe longitudinal 30.

Il existe des différences entre les bâtis 5, 6 des différents dispositifs de montage/démontage 11, 12, 13 : le premier dispositif de montage/démontage 11 et le deuxième dispositif de montage/démontage 12 comprennent chacun un bâti 5 qui s'étend de part et d'autre des deux éléments de charpente 91, 92, à la fois sur le premier côté et le second côté de la structure 9, tandis que le troisième dispositif de montage/démontage 13 comprend un bâti 6 qui est disposé uniquement sur le premier côté de la structure 9.

Dans le premier dispositif de montage/démontage 11 et dans le deuxième dispositif de montage/démontage 12, le bâti 5 comprend un berceau 50 ayant une forme générale en arche et qui est muni d'un plateau proximal 51 et d'un plateau distal 52 en vis-à-vis et reliés par un longeron 53, ce longeron 53 formant la partie formant butée conformée pour prendre appui latéralement sur l'un des deux éléments de charpente 91, 92 et assurer une reprise d'efforts rotationnels.

Le plateau proximal 51 supporte un tube proximal 54 définissant intérieurement un orifice proximal 55, et le plateau distal 52 comprend un orifice proximal 56 solidaire de l'écrou 59, où l'orifice proximal 55 et l'orifice distal 56 sont alignés sur un axe central 500 qui, en situation, est confondu ou sensiblement confondu avec l'axe longitudinal 30. Plus précisément, l'écrou 59 est solidaire du plateau distal 52, et cet écrou 59 est centré sur l'axe longitudinal 30. L'écrou 59 est donc fixé solidairement sur le plateau distal 52, par exemple par soudage.

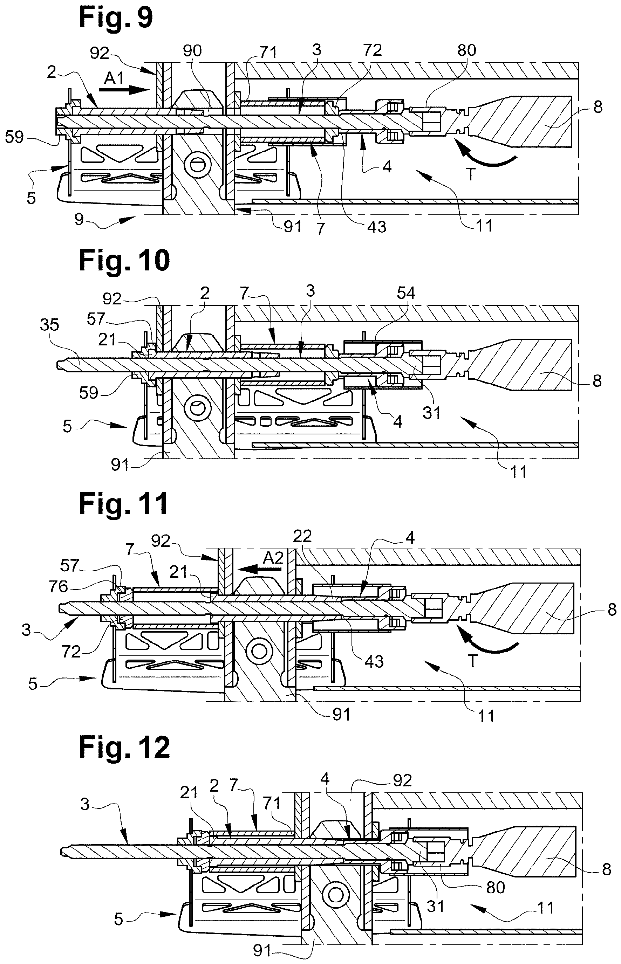

Par ailleurs, la butée proximale 4 est adaptée pour passer à l'intérieur de l'orifice proximal 55, et plus précisément la butée proximale 4 est adaptée pour coulisser à l'intérieur du tube proximal 54, comme visible sur les Figures 10 à 12 et 16 à 18.

Le plateau distal 52 supporte, sur une face interne en regard du plateau proximal 51, une couronne 57 entourant l'orifice proximal 55. Le longeron 53 présente des fenêtres 58, par exemple de forme triangulaire dans le premier dispositif de montage/démontage 11 ou de forme rectangulaire dans le deuxième dispositif de montage/démontage 12. Ce bâti 5 est réalisé dans un matériau métallique, et par exemple en acier, par exemple un soudage de ses différents composants.

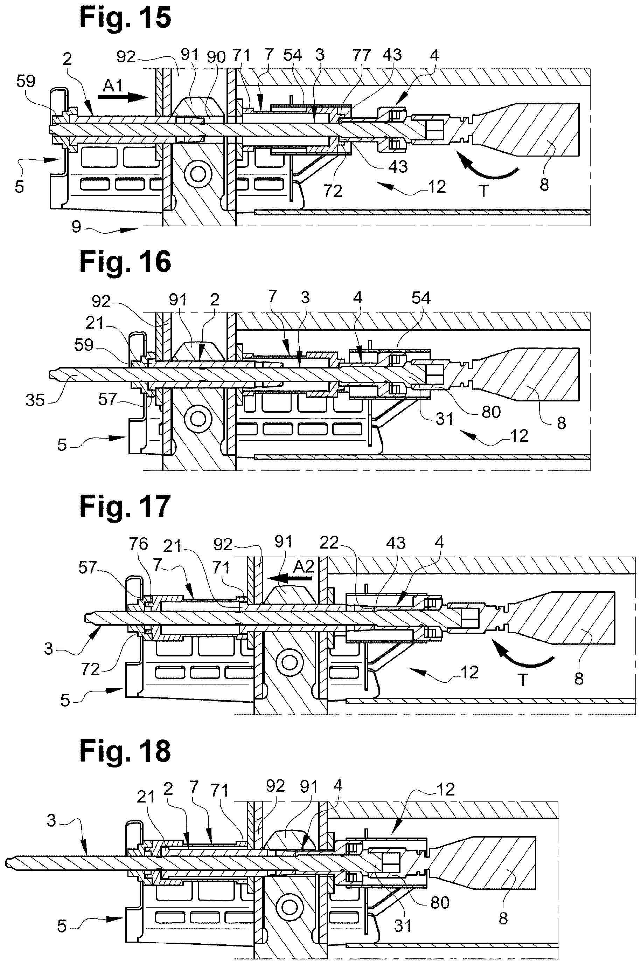

Cette couronne 57 est adaptée pour recevoir intérieurement :
- soit la tête élargie 21 de la goupille de liaison 2 dans la configuration de montage, comme visible sur les Figures 9 et 15 ;
- soit une seconde extrémité ouverte 72 d'une douille 7 dans la configuration de démontage, comme cela sera décrit ultérieurement.

En situation, et comme visible sur les Figures 8 à 12 et 15 à 18, le plateau proximal 51 est situé sur le second côté de la structure 9 (côté intérieur dans l'exemple de la Figure 1) et le plateau distal 52 est situé sur le premier côté de la structure 9 (côté extérieur dans l'exemple de la Figure 1) en face de la tête élargie 21 de la goupille de liaison 2, et le longeron 53 s'étend de part et d'autre des deux éléments de structure 91, 92 entre les deux côtés.

Dans le troisième dispositif de montage/démontage 13, le bâti 6 comprend un manchon de support 60 cylindrique, centré sur un axe qui, en situation, est confondu avec l'axe longitudinal 30 ; l'axe du manchon de support 60 sera donc assimilé pour la suite à l'axe longitudinal 30. Ce manchon de support 60 forme ainsi un tube et présente une extrémité proximale 61 ouverte et une extrémité distale 62 ouverte opposées. Le bâti 6 comprend également une paroi proximale 63, orthogonale à l'axe longitudinal 30, et qui est solidaire de l'extrémité proximale 61 du manchon de support 60.

Le manchon de support 60 supporte intérieurement l'écrou 69 qui est solidaire de deux pions de guidage 64 s'étendant radialement et disposés de manière diamétralement opposée par rapport à l'axe longitudinal 30. Par ailleurs, le manchon de support 60 présente deux fentes dans lesquelles sont engagés les deux pions de guidage 64 respectifs, où ces fentes définissent successivement, en partant de l'extrémité proximale 61 en direction de l'extrémité distale 62 :
- une rainure longitudinale 651 longitudinale s'étendant parallèlement à l'axe longitudinal 30 ;
- une rainure circonférentielle 652 qui prolonge la rainure longitudinale 651, du côté de l'extrémité distale 62 du manchon de support 60 ; et
- une rainure de verrouillage 653 qui poursuit la rainure circonférentielle 652 et qui a une forme générale en « L ».

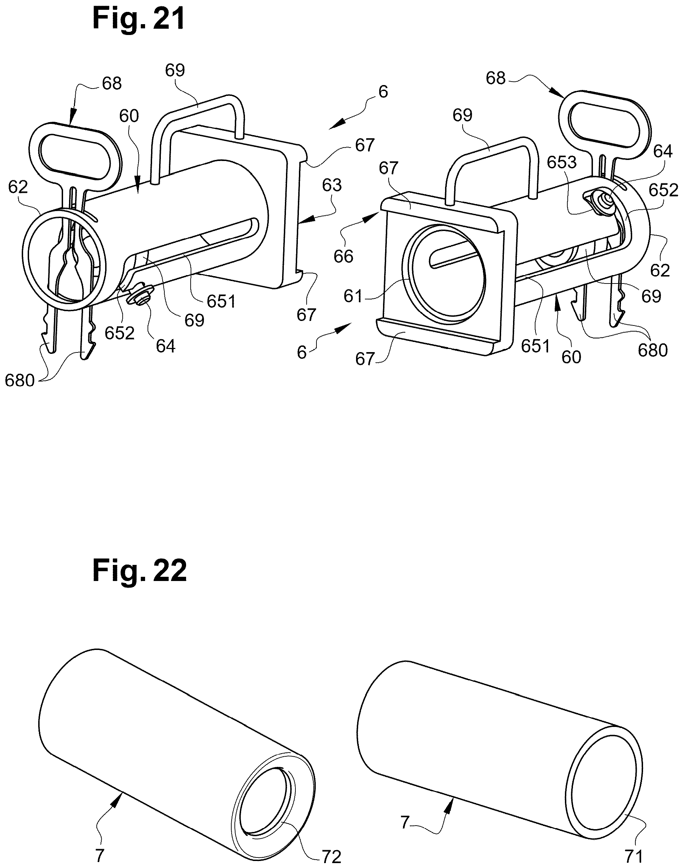

Ainsi, deux positionnements sont possibles pour l'écrou 69 et les pions de guidage 64 selon la configuration du troisième dispositif de montage/démontage 13 :
- dans la configuration de montage, visible sur les Figures 19 et 20, les pions de guidage 64 sont engagés dans les rainures longitudinales 651 correspondantes, de sorte que l'écrou 69 est bloqué en rotation autour de l'axe longitudinal 30 et est guidée en translation le long de l'axe longitudinal 30 ;
- dans la configuration de démontage, visible sur la Figure 21, les pions de guidage 64 sont engagés dans les rainures de verrouillage 653 correspondantes, de sorte que l'écrou 69 est bloqué en rotation autour de l'axe longitudinal 30 et est bloqué en translation le long de l'axe longitudinal 30.

L'écrou 69 passe de la configuration de montage à la configuration de démontage, et inversement, en faisant passer les pions de guidage 64 des rainures longitudinales 651 aux rainures de verrouillage 653, et inversement, via les rainures circonférentielles 652.

La paroi proximale 63 présente un relief d'appui 66 qui forme la partie formant butée conformée pour prendre appui sur l'un des deux éléments de charpente 91, 92 et assurer une reprise d'efforts rotationnels. Ce relief d'appui 66 présente une forme complémentaire de celle de l'un des deux éléments de charpente 91, 92, et dans l'exemple illustré ce relief d'appui 66 se présente sous la forme de deux butées linéaires 67 en vis-à-vis, délimitant entre elles une encoche dans laquelle débouche l'extrémité proximale 61 du manchon de support 60.

Bien que non illustré, il est envisageable de prévoir un ou plusieurs aimants disposé(s) sur le relief d'appui 66, par exemple sur les deux butées linéaires 67 en vis-à-vis, afin de maintenir par aimantation le bâti 6 sur l'un des deux éléments de charpente 91, 92.

Le bâti 6 comprend aussi un système de maintien 68 monté sur l'extrémité distale 62 du manchon de support 60 afin de coopérer avec l'extrémité libre 36 du corps de tige 32 de la tige de montage/démontage 3 dans la configuration de montage, pour bloquer axialement le corps de tige 32 le long de l'axe longitudinal 30. Dans l'exemple illustré, le système de maintien 68 se présente sous la forme d'un verrou mécanique de type clip de maintien, qui traverse transversalement le manchon de support 60 au niveau de son extrémité distale 62, et qui présente deux pattes 680 élastiquement déformable conformées pour se bloquer dans une gorge circonférentielle de verrouillage prévue à cet effet sur l'extrémité libre 36 du corps de tige 32. Dans la configuration de démontage, le système de maintien 68 est ôté ou déplacé pour ne plus coopérer avec l'extrémité libre 36 du corps de tige 32, et laisser ainsi le corps de tige 32 libre de translater le long de l'axe longitudinal 30 par rapport au manchon de support 60.

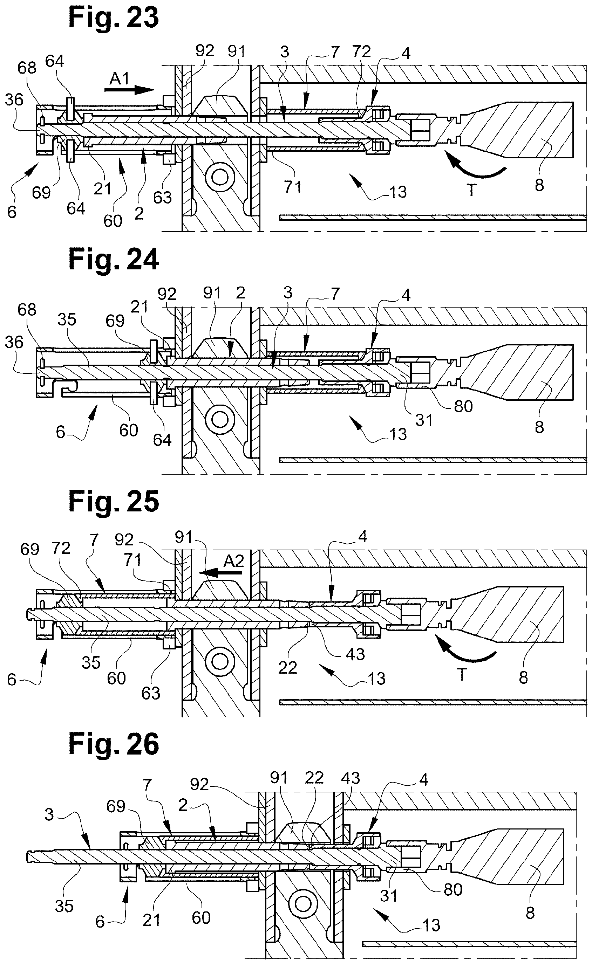

Une poignée 69 peut également être solidarisée au bâti 6 pour pouvoir le manipuler et le positionner manuellement. En situation, et comme visible sur les Figures 23 à 26, le bâti 6 est situé sur le premier côté de la structure 9 (côté extérieur dans l'exemple de la Figure 1) avec sa paroi proximale 63 en face de la tête élargie 21 de la goupille de liaison 2.

Chacun des dispositifs de montage/démontage 11, 12, 13 comprend une douille 7 qui est amovible et indépendante de la tige de montage/démontage 3, de la butée proximale 4 et du bâti 5, 6. En situation, cette douille 7 est montée libre en translation le long de l'axe longitudinal 30 autour du corps de tige 32, entre l'écrou 59, 69 et la butée proximale 4.

La douille 7, de forme générale cylindrique, présente une première extrémité ouverte 71 et une seconde extrémité ouverte 72. La première extrémité ouverte 71 présente un diamètre d'ouverture supérieure à celui de la seconde extrémité ouverte 72. Par ailleurs, la première extrémité ouverte 71 est dimensionnée pour permettre le passage de la tête élargie 21 de la goupille de liaison 2, ce qui permet à la goupille de liaison 2 d'entrer au moins partiellement à l'intérieur de la douille 7 au travers de sa première extrémité ouverte 71, que ce soit selon un premier sens d'insertion avec l'extrémité proximale 22 de la goupille de liaison 2 qui entre dans la première extrémité ouverte 71 de la douille 7 (comme visible sur les Figures 9, 10, 15, 16, 23 et 24 durant une phase de montage), et aussi selon un second sens d'insertion avec l'extrémité distale et la tête élargie 21 de la goupille de liaison 2 qui entrent dans la première extrémité ouverte 71 de la douille 7 (comme visible sur les Figures 11, 12, 17, 18, 25 et 26 durant une phase de démontage).

Deux positionnements de la douille 7 sont possibles selon la configuration du dispositif de montage/démontage 11, 12, 13 :
- dans la configuration de montage, visible sur les Figures 9, 10, 15, 16, 19, 20, 23 et 24, la douille 7 est en butée contre la butée proximale 4 et plus précisément la seconde extrémité ouverte 72 de la douille 7 est placée en butée contre la butée proximale 4 ;
- dans la configuration de démontage, visible sur les Figures 2, 3, 11, 12, 14, 17, 18, 25 et 26, la douille 7 est en butée contre l'écrou 59, 69 et plus précisément la seconde extrémité ouverte 72 de la douille 7 est placée en butée contre l'écrou 59, 69.

En situation, une fois le dispositif de montage/démontage 11, 12, 13 en place sur la structure 9 :
- dans la configuration de montage, la douille 7 est située sur le second côté de la structure 9, interposée entre la butée proximale 4 et l'un des deux éléments de charpente 91, 92, et où la première extrémité ouverte 71 de la douille 7 est en appui contre l'un des deux éléments de charpente 91, 92 sur le second côté de la structure 9, la première extrémité ouverte 71 de la douille 7 étant prête à recevoir intérieurement la goupille de liaison 2 ;
- dans la configuration de démontage, la douille 7 est située sur le premier côté de la structure 9, interposée entre l'écrou 59, 69 et l'un des deux éléments de charpente 91, 92, et où la première extrémité ouverte 71 de la douille 7 est en appui contre l'un des deux éléments de charpente 91, 92 sur le premier côté de la structure 9, la première extrémité ouverte 71 de la douille 7 entourant la tête élargie 21 de la goupille de liaison 2 et étant prête à recevoir intérieurement la goupille de liaison 2.

Il existe des différences entre les douilles 7 des différents dispositifs de montage/démontage 11, 12, 13.

Dans le premier dispositif de montage/démontage 11 et dans le deuxième dispositif de montage/démontage 12, la douille 7 présente un diamètre externe telle que la douille 7 est adaptée pour passer à l'intérieur de l'orifice proximal 55 du berceau 50 du bâti 5, et plus précisément la douille 7 est adaptée pour coulisser à l'intérieur du tube proximal 54, comme visible sur les Figures 9 et 15.

Dans le premier dispositif de montage/démontage 11 et dans le deuxième dispositif de montage/démontage 12, la douille 7 est solidaire d'un bras d'extension radiale 73 adaptée pour s'engager dans une fenêtre 58 ménagée dans le longeron 53 du berceau 50, afin de bloquer en rotation ladite douille 7 dans la configuration de démontage, comme visible sur les Figures 2, 3 et 14 ; ce bras d'extension radiale 73 permettant une reprise de couple lors du démontage. Avantageusement, le bras d'extension radiale 73 est munie d'une extrémité libre présentant un trou 74 dans lequel est engagée un organe de verrouillage 75, de type goupille, pour verrouiller le bras d'extension radiale 73 dans la fenêtre 58 du longeron 50, et ainsi éviter la chute de la douille 7 lors d'une phase de démontage. Dans le troisième dispositif de montage/démontage 13, la douille 7 ne présente pas un tel bras d'extension radiale.

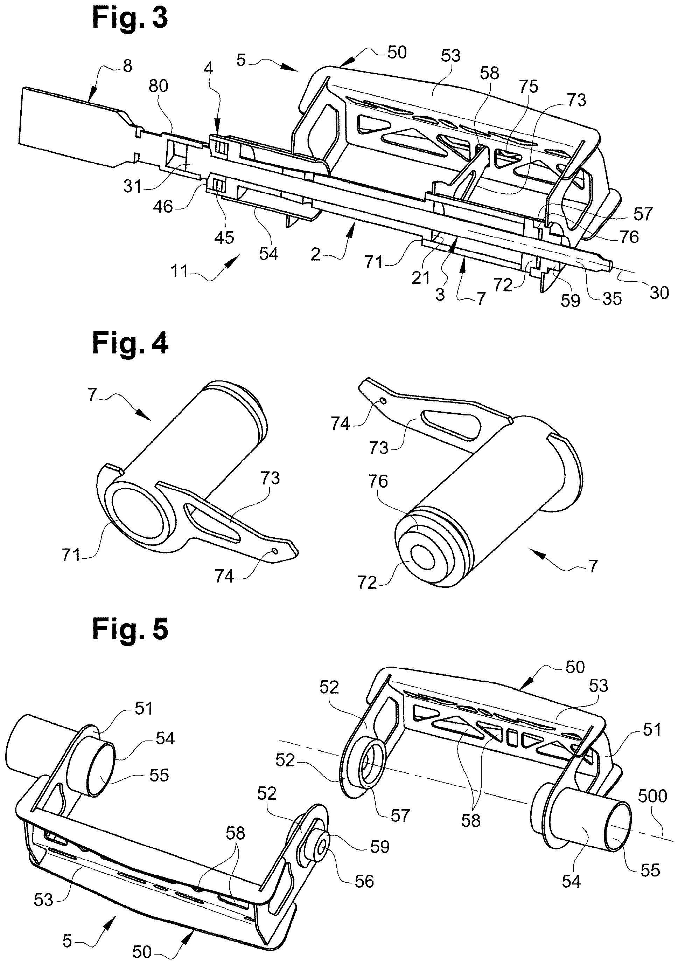

Dans le premier dispositif de montage/démontage 11 et dans le deuxième dispositif de montage/démontage 12, la seconde extrémité ouverte 72 de la douille 7 présente un palier extérieur 76 conformée pour être reçu intérieurement dans la couronne 57 prévue sur le plateau proximal 51 du bâti 5, dans la configuration de démontage, comme visible sur les Figures 3, 11 et 17.

Dans le deuxième dispositif de montage/démontage 12, la seconde extrémité ouverte 72 de la douille 7 présente un palier intérieur 77, entouré par le palier extérieur 76, prévue pour recevoir intérieurement l'extrémité distale 43 de la butée proximale 4 dans la configuration de montage, comme visible sur la Figure 15 ; cette extrémité distale 43 venant buter contre la seconde extrémité ouverte 72. Ce palier intérieur 77 permet ainsi de guider ou centrer la butée proximale 4 sur la douille 7. Dans le premier dispositif de montage/démontage 11, la douille 7 ne présente pas un tel palier intérieur, l'extrémité distale 43 de la butée proximale 4 venant buter contre la seconde extrémité ouverte 72 sans être reçue dans un tel palier intérieur.

Dans le premier dispositif de montage/démontage 11 et dans le deuxième dispositif de montage/démontage 12, la seconde extrémité ouverte 72 de la douille 7 est dimensionnée pour que, dans la configuration de montage, cette seconde extrémité ouverte 72 soit en butée contre la section distale 42 de la butée proximale 4. Dans le troisième dispositif de montage/démontage 13, la seconde extrémité ouverte 72 de la douille 7 est dimensionnée pour que, dans la configuration de montage, cette seconde extrémité ouverte 72 soit en butée contre la section proximale 41 de la butée proximale 4.

La suite de la description porte sur le procédé de montage pour monter la goupille de liaison 2, en référence aux Figures 9, 10, 15, 16, 23 et 24.

Dans un premier temps, la goupille de liaison 2 est positionnée, sur le premier côté de la structure 9, dans le trou de liaison 90 traversant les deux éléments de charpente 91, 92 en superposition, sa tête élargie 21 étant à distance des deux éléments de charpente 91, 92.

Ensuite, la douille 7 est montée autour de la tige de montage/démontage 3, en amenant sa seconde extrémité ouverte 72 en butée contre la butée proximale 4.

Le bâti 5, 6 est mis en place sur la structure 9 avec l'écrou 59, 69 disposé sur le premier côté de la structure 9 en alignement avec l'axe principal 20 de la goupille de liaison (donc à terme avec l'axe longitudinal 30), et la tête élargie 21 de la goupille de liaison 2 est placée en butée contre le bâti 5, 6.

Avec le premier dispositif de montage/démontage 11 et le deuxième dispositif de montage/démontage 12, le bâti 5 prend appui sur la tête élargie 21, en engageant la couronne 57 autour de la tête élargie 21, ce qui permet un centrage du bâti 5. Avec le troisième dispositif de montage/démontage 13, le bâti 6 prend aussi appui sur la tête élargie 21, en engageant le manchon de support 60 autour de la tête élargie 21, ce qui permet un maintien du bâti 6.

Puis la tige de montage/démontage 3 est enfoncée et traverse les deux éléments de charpente 91, 92 et la goupille de liaison 2 jusqu'à ce que la partie distale filetée 35 vienne au contact de l'écrou 59, 69 supporté par le bâti 5, 6, et que la douille 7 soit en appui contre l'un des deux éléments de charpente sur le second côté de la structure 9.

Avec le premier dispositif de montage/démontage 11 et le deuxième dispositif de montage/démontage 12, il est envisageable d'avoir positionné la douille 7 à l'intérieur du tube proximal 54, avant d'enfoncer la tige de montage/démontage 3 qui va ainsi traverser la douille 7 jusqu'à ce que celle-ci soit en butée contre la butée proximale 7.

La tête 31 de la tige de montage/démontage 3 est accouplée à l'embout 80 de la visseuse 8 qui est située sur le second côté de la structure 9, à l'opposé de la goupille de liaison 2. Il est envisageable de réaliser cet accouplement avant ou après avoir enfoncé la tige de montage/démontage 3 au travers des deux éléments de charpente 91, 92 et de la goupille de liaison 2.

Ensuite, la visseuse 8 est activée pour faire tourner la tige de montage/démontage 3 (comme schématisé par les flèches T sur les Figures 9, 15 et 23) et ainsi pour visser la partie distale filetée 35 dans l'écrou 59, 69, conduisant à un déplacement axial de l'écrou 59, 69 selon un sens allant du premier côté en direction du second côté de la structure 9 (comme schématisé par les flèches A1 sur les Figures 9, 15 et 23), et donc aussi à un déplacement axial de la goupille de liaison 2 (poussée par l'écrou 59, 69) qui s'engage au travers des deux éléments de charpente 91, 92.

Durant le vissage, la partie formant butée du bâti 5, 6 (que ce soit le longeron 30 ou le relief d'appui 66) est en appui sur l'un des deux éléments de charpente 91, 92 afin de bloquer en rotation le bâti 5, 6 et l'écrou 59, 69 autour de l'axe longitudinal 30, cette partie formant butée assurant ainsi la reprise de couple.

Avec le troisième dispositif de montage/démontage 13, la visseuse 8 est activée pour que l'extrémité libre 36 de la tige de montage/démontage 3 puisse venir en face du système de maintien 68, puis la visseuse 8 est désactivée le temps que le système de maintien 68 soit mis en place pour coopérer avec cette extrémité libre 36 afin de bloquer axialement la tige de montage/démontage 3 le long de l'axe longitudinal 30. Et ensuite, la visseuse 8 est réactivée pour finir le vissage.

Enfin, une fois la tête élargie 21 de la goupille de liaison 2 en butée contre l'un des deux éléments de charpente 91, 92 (donc une fois la goupille de liaison 2 montée), la visseuse 2 est activée en sens inverse pour dévisser la partie distale filetée 35 hors de l'écrou 59, 69 et ensuite retirer le dispositif de montage/démontage 11, 12, 13.

La suite de la description porte sur le procédé de démontage pour démonter la goupille de liaison 2, en référence aux Figures 11, 12, 17, 18, 25 et 26.

Au départ, la goupille de liaison 2 est montée, de sorte que celle-ci est montée dans le trou de liaison 90 traversant les deux éléments de charpente 91, 92 en superposition, sa tête élargie 21 étant en butée sur l'un des deux éléments de charpente 91, 92 sur le premier côté de la structure 9.

Le bâti 5, 6 est mis en place sur la structure 9 avec l'écrou 59, 69 disposé sur le premier côté de la structure 9 en alignement avec l'axe principal 20 de la goupille de liaison (donc à terme avec l'axe longitudinal 30), et avec la douille 7 qui est montée sur le bâti 5, 6, sur le premier côté de la structure 9, et qui est interposé entre l'écrou 59, 69 et l'un des deux éléments de charpente 91, 92, la première extrémité ouverte 71 de la douille 7 entourant la tête élargie 21 de la goupille de liaison 2.

Avec le premier dispositif de montage/démontage 11 et le deuxième dispositif de montage/démontage 12, la douille 7 prend appui sur la tête élargie 21, en ayant sa première extrémité ouverte 71 engagée de manière ajustée autour de la tête élargie 21, et le bâti 5 prend appui sur la seconde extrémité ouverte 72 de la douille 7 en ayant sa couronne 57 engagée de manière ajustée autour du palier extérieur 76, ce qui permet un centrage du bâti 5 et de la douille 7. Avec le troisième dispositif de montage/démontage 13, la douille 7 prend appui sur la tête élargie 21, en ayant sa première extrémité ouverte 71 engagée de manière ajustée autour de la tête élargie 21, et le manchon de support 60 est montée de manière ajustée autour de la douille 7, ce qui permet également un centrage du bâti 6 et de la douille 7.

Puis, la tige de montage/démontage 3 est enfoncée et traverse la goupille de liaison 2, en entrant dans celle-ci au niveau de son extrémité proximale 22, et traverse la douille 7 jusqu'à ce que la partie distale filetée 35 vienne au contact de l'écrou 59, 69.

La tête 31 de la tige de montage/démontage 3 est accouplée à l'embout 80 de la visseuse 8 qui est située sur le second côté de la structure 9, à l'opposé de la goupille de liaison 2. Il est envisageable de réaliser cet accouplement avant ou après avoir enfoncé la tige de montage/démontage 3 au travers de la goupille de liaison 2.

Ensuite, la visseuse 8 est activée pour faire tourner la tige de montage/démontage 3 (comme schématisé par les flèches T sur les Figures 11, 17 et 25) et ainsi pour visser la partie distale filetée 35 dans l'écrou 59, 69, conduisant à un déplacement axial de la butée proximale 4 qui vient en butée contre l'extrémité proximale 22 de la goupille de liaison 2, poussant ainsi axialement la goupille de liaison 2 selon un sens allant du second côté en direction du premier côté de la structure (comme schématisé par les flèches A2 sur les Figures 11, 17 et 25), pour que la goupille de liaison 2 sorte au moins partiellement des deux éléments de charpente 91, 92 tout en entrant à l'intérieur de la douille 7.

Enfin, une fois la butée proximale 4 en butée contre l'un des deux éléments de charpente 91, 92, la visseuse 8 est activée en sens inverse pour dévisser la partie distale filetée 35 hors de l'écrou 59, 69 et ensuite retirer le dispositif de montage/démontage 11, 12, 13. A l'issue de ces opérations, la goupille de liaison 2 est suffisamment sortie du trou de liaison 90, pour pouvoir aisément finir de la sortir complètement, en particulier à la main.

Il est enfin à noter que, comme illustré sur la Figure 13, le dispositif de montage/démontage 11, comme 12 ou 13, peut être stocké, avec une ou plusieurs goupilles de liaison 2, sur l'un des deux éléments de charpente 91, 92, et par exemple sur l'élément de charpente 92 qui constitue une partie formant pivot fixe, ceci afin d'éviter au monteur de se déplacer avec le dispositif de montage/démontage et avec la ou les goupilles de liaison 2 nécessaires ; le monteur n'ayant qu'à se munir de la visseuse 8.

## Revendications

1. Dispositif de montage/démontage (11; 12; 13) pour monter/démonter une goupille de liaison (2) employée pour un assemblage bout à bout de deux éléments de charpente (91, 92) d'une structure (9), comme par exemple une structure de grue, ledit dispositif de montage/démontage (11; 12; 13) comprenant :
- une tige de montage/démontage (3) présentant un axe longitudinal (30), une tête (31) adaptée pour coopérer avec une visseuse (8), et un corps de tige (32) présentant une partie proximale (33) prolongeant la tête (31) et une partie distale filetée (35) qui se termine par une extrémité libre (36) ;
- un bâti (5; 6) supportant un écrou (59; 69) et présentant une partie formant butée (53; 66) conformée pour prendre appui sur l'un des deux éléments de charpente (91, 92), la partie distale filetée (35) étant prévue pour se visser dans ledit écrou (59; 69) aligné sur l'axe longitudinal (30) ;
- une butée proximale (4) montée libre en rotation sur la partie proximale (33) du corps de tige (32) autour de l'axe longitudinal (30) ;
- une douille (7) qui est amovible et montée libre en translation le long de l'axe longitudinal (30) autour du corps de tige (32) entre l'écrou (59; 69) et la butée proximale (4), ladite douille (7) présentant une première extrémité ouverte (71) et une seconde extrémité ouverte (72) ;
ledit dispositif de montage/démontage (11; 12; 13) étant configurable dans :
- une configuration de montage dans laquelle la douille (7) est en butée contre la butée proximale (4) ; et
- une configuration de démontage dans laquelle la douille (7) est en butée contre le bâti (5 ; 6) ou l'écrou (59; 69).

2. Dispositif de montage/démontage (13) selon la revendication 1, dans lequel le bâti (6) comprend un manchon de support (60) aligné sur l'axe longitudinal (30) et présentant une extrémité proximale (61) ouverte et une extrémité distale (62) ouverte opposées, ledit manchon de support (60) supportant intérieurement l'écrou (59; 69), et dans lequel :
- dans la configuration de montage, l'écrou (69) est bloqué en rotation et est guidée en translation le long de l'axe longitudinal (30) ;
- dans la configuration de démontage, l'écrou (69) est bloqué en rotation et est bloqué en translation le long de l'axe longitudinal (30).

3. Dispositif de montage/démontage (13) selon la revendication 2, dans lequel au moins une rainure longitudinale (651) est ménagée sur le manchon de support (60), ladite rainure longitudinale (651) s'étendant parallèlement à l'axe longitudinal (30), et l'écrou (69) est solidaire d'au moins un pion de guidage (64) qui, dans la configuration de montage, est engagé dans la rainure longitudinale (651) correspondante pour bloquer l'écrou (69) en rotation et guider l'écrou (69) en translation le long de l'axe longitudinal (30).

4. Dispositif de montage/démontage (13) selon la revendication 2 ou 3, dans lequel le bâti (6) comprend un système de maintien (68) monté sur l'extrémité distale (62) du manchon de support (60) et coopérant avec l'extrémité libre (36) du corps de tige (32) de la tige de montage/démontage (3) dans la configuration de montage, pour bloquer axialement le corps de tige (32) le long de l'axe longitudinal (30).

5. Dispositif de montage/démontage (13) selon l'une quelconque des revendications 2 à 4, dans lequel le bâti (6) comprend un ou plusieurs aimants disposés sur la partie formant butée (66) pour un maintien par aimantation du bâti (6) sur l'un des deux éléments de charpente (91, 92).

6. Dispositif de montage/démontage (11; 12) selon la revendication 1, dans lequel le bâti (5) comprend un berceau (50) ayant une forme générale en arche et muni d'un plateau proximal (51) et d'un plateau distal (52) en vis-à-vis et reliés par un longeron (53), ledit longeron (53) formant la partie formant butée conformée pour prendre appui sur l'un des deux éléments de charpente (91, 92).

7. Dispositif de montage/démontage (11; 12) selon la revendication 6, dans lequel le plateau proximal (51) et le plateau distal (52) comprennent respectivement un orifice proximal (55) et un orifice distal (56) alignés sur l'axe longitudinal (30), ledit orifice distal (56) étant solidaire de l'écrou (59), et dans lequel la butée proximale (4) et la douille (7) sont adaptées pour passer à l'intérieur de l'orifice proximal (55) du berceau (50).

8. Dispositif de montage/démontage (11; 12) selon la revendication 6 ou 7, dans lequel la douille (7) est solidaire d'un bras d'extension radiale (73) adaptée pour s'engager dans une fenêtre (58) ménagée dans le longeron (53) du berceau (50), afin de bloquer en rotation ladite douille (7) dans la configuration de démontage.

9. Dispositif de montage/démontage (11; 12; 13) selon l'une quelconque des revendications précédentes, dans lequel la butée proximale (4) est guidée en rotation par un organe de roulement (45) monté autour de la partie proximale (33) du corps de tige (32).

10. Dispositif de montage/démontage (11; 12; 13) selon la revendication 9, dans lequel l'organe de roulement (45) est interposé entre une butée annulaire (46), qui est en appui contre la tête (31) de la tige de montage/démontage (3), et un épaulement interne prévu dans la butée proximale (4).

11. Système de montage/démontage pour monter/démonter une goupille de liaison (2) employée pour un assemblage bout à bout de deux éléments de charpente (91, 92) d'une structure (9), comme par exemple une structure de grue, ledit système de montage comprenant :
- un dispositif de montage/démontage (11; 12; 13) selon l'une quelconque des revendications 1 à 10 ; et
- une visseuse (8), par exemple une visseuse à percussion, munie d'un embout (80) apte à coopérer avec la tête (31) de la tige de montage/démontage (3), pour pouvoir entraîner en rotation ladite tige de montage/démontage (3).

12. Kit d'assemblage pour un assemblage bout à bout de deux éléments de charpente (91, 92) d'une structure (9), comme par exemple une structure de grue, ledit kit d'assemblage comprenant :
- un dispositif de montage/démontage (11; 12; 13) selon l'une quelconque des revendications 1 à 10 ; et
- au moins une goupille de liaison (2) adaptée pour traverser un trou de liaison (90) traversant les deux éléments de charpente (91, 92) en superposition ;
dans lequel la goupille de liaison (2) est de forme tubulaire pour pouvoir être traversée par la tige de montage/démontage (3) et présente une extrémité distale munie d'une tête élargie (21) et une extrémité proximale (22) opposées.

13. Kit d'assemblage selon la revendication 12, dans lequel la première extrémité ouverte (71) de la douille (7) est dimensionnée pour laisser entrer au moins partiellement la goupille de liaison (2) à l'intérieur de ladite douille (7), selon un premier sens d'insertion avec l'extrémité proximale (22) de la goupille de liaison (2) qui entre dans la première extrémité ouverte (71) de la douille (7), et aussi selon un second sens d'insertion avec l'extrémité distale et la tête élargie (21) de la goupille de liaison (2) qui entrent dans la première extrémité ouverte (71) de la douille (7).

14. Procédé de montage pour monter une goupille de liaison (2) employée pour un assemblage bout à bout de deux éléments de charpente (91, 92) d'une structure (9), comme par exemple une structure de grue, ledit procédé de montage comprenant une fourniture d'un dispositif de montage/démontage (11; 12; 13) selon l'une quelconque des revendications 1 à 10, dans lequel :
- la goupille de liaison (2), de forme tubulaire, est positionnée dans un trou de liaison (90) traversant les deux éléments de charpente (91, 92) en superposition, et cette goupille de liaison (2) présente une extrémité distale munie d'une tête élargie (21) et une extrémité proximale (22) opposées, ladite tête élargie (21) étant disposée sur un premier côté de la structure (9), par exemple un côté extérieur ;
- la douille (7) est montée autour du corps de tige (32), sur un second côté de la structure (9), opposé au premier côté de la structure (9), avec sa seconde extrémité ouverte (72) qui est placée en butée contre la butée proximale (4) ;
- le bâti (5; 6) est mis en place sur la structure (9) avec l'écrou (59; 69) disposé sur le premier côté de la structure (9) en alignement avec la goupille de liaison (2), dont la tête élargie (21) est placée en butée contre l'écrou (59; 69) ou le bâti (5; 6) ;
- la tige de montage/démontage (3) est enfoncée et traverse les deux éléments de charpente (91, 92) et la goupille de liaison (2) jusqu'à ce que la partie distale filetée (35) vienne au contact de l'écrou (59; 69) supporté par le bâti (5; 6), et que la douille (7) soit en appui contre l'un des deux éléments de charpente (91, 92) sur le second côté de la structure (9) ;
- la tête (31) de la tige de montage/démontage (3) est accouplée à un embout (80) d'une visseuse (8), par exemple une visseuse à percussion, qui est située sur le second côté de la structure (9) ;
- la visseuse (8) est activée pour visser la partie distale filetée (35) dans l'écrou (59; 69), conduisant à un déplacement axial de l'écrou (59; 69) selon un sens allant du premier côté en direction du second côté de la structure (9), et donc aussi à un déplacement axial de la goupille de liaison (2) qui s'engage au travers des deux éléments de charpente (91, 92), et où durant le vissage la partie formant butée (53; 66) du bâti (5; 6) est en appui sur l'un des deux éléments de charpente (91, 92) afin de bloquer en rotation le bâti (5; 6) et l'écrou (59; 69) ;
- une fois la tête élargie (21) de la goupille de liaison (2) en butée contre l'un des deux éléments de charpente (91, 92), la visseuse (8) est activée en sens inverse pour dévisser la partie distale filetée (35) hors de l'écrou (59; 69) et ensuite retirer le dispositif de montage/démontage (11; 12; 13).

15. Procédé de démontage pour démonter une goupille de liaison (2) employée pour un assemblage bout à bout de deux éléments de charpente (91, 92) d'une structure (9), comme par exemple une structure de grue, ledit procédé de démontage comprenant une fourniture d'un dispositif de montage/démontage (11; 12; 13) selon l'une quelconque des revendications 1 à 10, dans lequel :
- la goupille de liaison (2), de forme tubulaire, est montée au travers des deux éléments de charpente (91, 92) en superposition afin de les assembler, et cette goupille de liaison (2) présente une extrémité distale munie d'une tête élargie (21) et une extrémité proximale (22) opposées, ladite tête élargie (21) étant disposée sur un premier côté de la structure (9), par exemple un côté extérieur ;
- le bâti (5; 6) est mis en place sur la structure (9) avec l'écrou (59; 69) disposé sur le premier côté de la structure (9) en alignement avec la goupille de liaison (2), et avec la douille (7) qui est montée sur le bâti (5; 6), sur le premier côté de la structure (9), et qui est interposé entre l'écrou (59; 69) et l'un des deux éléments de charpente (91, 92), la première extrémité ouverte (71) de la douille (7) entourant la tête élargie (21) de la goupille de liaison (2) ;
- la tige de montage/démontage (3) est enfoncée et traverse la goupille de liaison (2) et la douille (7) jusqu'à ce que la partie distale filetée (35) vienne au contact de l'écrou (59; 69) ;
- la tête (31) de la tige de montage/démontage (3) est accouplée à un embout (80) d'une visseuse (8), par exemple une visseuse à percussion, qui est située sur un second côté de la structure (9), opposé au premier côté de la structure (9) ;
- la visseuse (8) est activée pour visser la partie distale filetée (35) dans l'écrou (59; 69), conduisant à un déplacement axial de la butée proximale (4) qui vient en butée contre l'extrémité proximale (22) de la goupille de liaison (2), poussant ainsi axialement la goupille de liaison (2) selon un sens allant du second côté en direction du premier côté de la structure (9), pour que la goupille de liaison (2) sorte au moins partiellement des deux éléments de charpente (91, 92) tout en entrant à l'intérieur de la douille (7) ;
- une fois la butée proximale (4) en butée contre l'un des deux éléments de charpente (91, 92), la visseuse (8) est activée en sens inverse pour dévisser la partie distale filetée (35) hors de l'écrou (59; 69) et ensuite retirer le dispositif de montage/démontage (11; 12; 13).

## Patentansprüche

1. Montage-/Demontagevorrichtung (11; 12; 13) zum Montieren/Demontieren eines Verbindungsbolzens (2), der für ein End-zu-End-Zusammenfügen von zwei Gerüstelementen (91, 92) einer Struktur (9), wie zum Beispiel einer Kranstruktur, eingesetzt wird, wobei die Montage-/Demontagevorrichtung (11; 12; 13) Folgendes umfasst:
- eine Montage-/Demontagestange (3), die eine Längsachse (30), einen Kopf (31), der dazu ausgelegt ist, mit einem Schraubendreher (8) zusammenzuwirken, und einen Stangenkörper (32) aufweist, der einen proximalen Abschnitt (33), der den Kopf (31) verlängert, und einem distalen Gewindeabschnitt (35) aufweist, der in einem freien Ende (36) endet;
- einen Rahmen (5; 6), der eine Mutter (59; 69) trägt und einen Anschlagabschnitt (53; 66) aufweist, der so geformt ist, dass er auf einem der beiden Gerüstelemente (91, 92) aufliegt, wobei der distale Gewindeabschnitt (35) dazu vorgesehen ist, in die mit der Längsachse (30) ausgerichtete Mutter (59; 69) eingeschraubt zu werden;
- einen proximalen Anschlag (4), der frei drehbar am proximalen Abschnitt (33) des Stangenkörpers (32) um die Längsachse (30) herum montiert ist;
- eine Buchse (7), die abnehmbar und frei translatorisch entlang der Längsachse (30) um den Stangenkörper (32) herum zwischen der Mutter (59; 69) und dem proximalen Anschlag (4) montiert ist, wobei die Buchse (7) ein erstes offenes Ende (71) und ein zweites offenes Ende (72) aufweist;
wobei die Montage-/Demontagevorrichtung (11; 12; 13) konfigurierbar ist in:
- einer Montagekonfiguration, in der die Buchse (7) am proximalen Anschlag (4) anliegt; und
- einer Demontagekonfiguration, in der die Buchse (7) an dem Rahmen (5; 6) oder der Mutter (59; 69) anliegt.

2. Montage-/Demontagevorrichtung (13) nach Anspruch 1, wobei der Rahmen (6) eine Trägerhülse (60) umfasst, die mit der Längsachse (30) ausgerichtet ist und ein offenes proximales Ende (61) und ein gegenüberliegendes offenes distales Ende (62) aufweist, wobei die Trägerhülse (60) die Mutter (59; 69) innen trägt, und wobei:
- in der Montagekonfiguration die Mutter (69) in der Drehung blockiert ist und translatorisch entlang der Längsachse (30) geführt wird;
- in der Demontagekonfiguration die Mutter (69) in der Drehung blockiert ist und translatorisch entlang der Längsachse (30) blockiert ist.

3. Montage-/Demontagevorrichtung (13) nach Anspruch 2, wobei mindestens eine Längsnut (651) an der Trägerhülse (60) ausgebildet ist, wobei sich die Längsnut (651) parallel zur Längsachse (30) erstreckt, und die Mutter (69) fest mit mindestens einem Führungsstift (64) verbunden ist, der in der Montagekonfiguration in die entsprechende Längsnut (651) eingreift, um die Drehung der Mutter (69) zu blockieren und die Translation der Mutter (69) entlang der Längsachse (30) zu führen.

4. Montage-/Demontagevorrichtung (13) nach Anspruch 2 oder 3, wobei der Rahmen (6) ein Haltesystem (68) umfasst, das am distalen Ende (62) der Trägerhülse (60) montiert ist und in der Montagekonfiguration mit dem freien Ende (36) des Stangenkörpers (32) der Montage-/Demontagestange (3) zusammenwirkt, um den Stangenkörper (32) axial entlang der Längsachse (30) zu blockieren.

5. Montage-/Demontagevorrichtung (13) nach einem der Ansprüche 2 bis 4, wobei der Rahmen (6) einen oder mehrere Magnete umfasst, die am Anschlagabschnitt (66) angeordnet sind, um den Rahmen (6) durch Magnetisierung an einem der beiden Gerüstelemente (91, 92) zu halten.

6. Montage-/Demontagevorrichtung (11; 12) nach Anspruch 1, wobei der Rahmen (5) ein Gestell (50) umfasst, das eine allgemein gewölbte Form hat und mit einer proximalen Platte (51) und einer distalen Platte (52) ausgestattet ist, die einander zugewandt und durch einen Längsträger (53) verbunden sind, wobei der Längsträger (53) den Anschlagabschnitt bildet, der so geformt ist, dass er auf einem der beiden Gerüstelemente (91, 92) aufliegt.

7. Montage-/Demontagevorrichtung (11; 12) nach Anspruch 6, wobei die proximale Platte (51) und die distale Platte (52) jeweils eine proximale Öffnung (55) und eine distale Öffnung (56) umfassen, die mit der Längsachse (30) ausgerichtet sind, wobei die distale Öffnung (56) fest mit der Mutter (59) verbunden ist, und wobei der proximale Anschlag (4) und die Buchse (7) dazu ausgelegt sind, durch das Innere der proximalen Öffnung (55) des Gestells (50) zu passen.

8. Montage-/Demontagevorrichtung (11; 12) nach Anspruch 6 oder 7, wobei die Buchse (7) fest mit einem radialen Verlängerungsarm (73) verbunden ist, der dazu ausgelegt ist, in ein im Längsträger (53) des Gestells (50) ausgebildetes Fenster (58) einzugreifen, um die Drehung der Buchse (7) in der Demontagekonfiguration zu blockieren.

9. Montage-/Demontagevorrichtung (11; 12; 13) nach einem der vorhergehenden Ansprüche, wobei der proximale Anschlag (4) durch ein Rollbauteil (45) drehbar geführt wird, das um den proximalen Abschnitt (33) des Stangenkörpers (32) herum montiert ist.

10. Montage-/Demontagevorrichtung (11; 12; 13) nach Anspruch 9, wobei das Rollbauteil (45) zwischen einem ringförmigen Anschlag (46), der gegen den Kopf (31) der Montage-/Demontagestange (3) anliegt, und einer inneren Schulter, die im proximalen Anschlag (4) vorgesehen ist, eingefügt ist.

11. Montage-/Demontagesystem zum Montieren/Demontieren eines Verbindungsbolzens (2), der für ein End-zu-End-Zusammenfügen von zwei Gerüstelementen (91, 92) einer Struktur (9), wie zum Beispiel einer Kranstruktur, eingesetzt wird, wobei das Montage-/Demontagesystem Folgendes umfasst:
- eine Montage-/Demontagevorrichtung (11; 12; 13) nach einem der Ansprüche 1 bis 10; und
- einen Schraubendreher (8), zum Beispiel einen Drehschlagschrauber, der mit einem Aufsatz (80) ausgestattet ist, der dazu geeignet ist, mit dem Kopf (31) der Montage-/Demontagestange (3) zusammenzuwirken, um die Montage-/Demontagestange (3) drehantreiben zu können.

12. Montagesatz für ein End-zu-End-Zusammenfügen von zwei Gerüstelementen (91, 92) einer Struktur (9), wie zum Beispiel einer Kranstruktur, wobei der Montagesatz Folgendes umfasst:
- eine Montage-/Demontagevorrichtung (11; 12; 13) nach einem der Ansprüche 1 bis 10; und
- mindestens einen Verbindungsbolzen (2), der dazu ausgelegt ist, durch ein Verbindungsloch (90) hindurch zu verlaufen, das durch die beiden übereinanderliegenden Gerüstelemente (91, 92) verläuft;
wobei der Verbindungsbolzen (2) eine rohrförmige Form aufweist, um durch die Montage-/Demontagestange (3) hindurchverlaufen zu können, und ein distales Ende aufweist, das mit einem vergrößerten Kopf (21) und einem proximalen Ende (22), die einander gegenüberliegen, ausgestattet ist.

13. Montagesatz nach Anspruch 12, wobei das erste offene Ende (71) der Buchse (7) so bemessen ist, dass es den Verbindungsbolzen (2) mindestens teilweise in das Innere der Buchse (7) in einer ersten Einführrichtung, in der das proximale Ende (22) des Verbindungsbolzens (2) in das erste offene Ende (71) der Buchse (7) eintritt, und auch in einer zweiten Einführrichtung eintreten lässt, in der das distale Ende und der vergrößerte Kopf (21) des Verbindungsbolzens (2) in das erste offene Ende (71) der Buchse (7) eintreten.

14. Montageverfahren zum Montieren eines Verbindungsbolzens (2), der für ein End-zu-End-Zusammenfügen von zwei Gerüstelementen (91, 92) einer Struktur (9), wie zum Beispiel einer Kranstruktur, eingesetzt wird, wobei das Montageverfahren ein Bereitstellen einer Montage-/Demontagevorrichtung (11; 12; 13) nach einem der Ansprüche 1 bis 10 umfasst, wobei:
- der rohrförmige Verbindungsbolzen (2) in einem Verbindungsloch (90) positioniert ist, das durch die beiden übereinanderliegenden Gerüstelemente (91, 92) verläuft, und der Verbindungsbolzen (2) ein distales Ende, das mit einem vergrößerten Kopf (21) ausgestattet ist, und ein proximales Ende (22), die einander gegenüberliegen, aufweist, wobei der vergrößerte Kopf (21) auf einer ersten Seite der Struktur (9), zum Beispiel einer Außenseite, angeordnet ist;
- die Buchse (7) um den Stangenkörper (32) herum auf einer zweiten Seite der Struktur (9), gegenüber der ersten Seite der Struktur (9), montiert ist, wobei ihr zweites offenes Ende (72) gegen den proximalen Anschlag (4) anliegend platziert ist;
- der Rahmen (5; 6) an der Struktur (9) so platziert wird, dass die Mutter (59; 69) auf der ersten Seite der Struktur (9) in Ausrichtung mit dem Verbindungsbolzen (2) angeordnet ist, dessen vergrößerter Kopf (21) gegen die Mutter (59; 69) oder den Rahmen (5; 6) anliegend platziert ist;
- die Montage-/Demontagestange (3) durch die beiden Gerüstelemente (91, 92) und den Verbindungsbolzen (2) geschoben wird und durch diese verläuft, bis der distale Gewindeabschnitt (35) in Kontakt mit der von dem Rahmen (5; 6) getragenen Mutter (59; 69) kommt und die Buchse (7) an einem der beiden Gerüstelemente (91, 92) auf der zweiten Seite der Struktur (9) anliegt;
- der Kopf (31) der Montage-/Demontagestange (3) mit einem Aufsatz (80) eines Schraubendrehers (8), zum Beispiel eines Drehschlagschraubers, gekoppelt ist, der sich auf der zweiten Seite der Struktur (9) befindet;
- der Schraubendreher (8) aktiviert wird, um den distalen Gewindeabschnitt (35) in die Mutter (59; 69) einzuschrauben, was zu einer axialen Verschiebung der Mutter (59; 69) in einer Richtung von der ersten Seite in Richtung der zweiten Seite der Struktur (9) und daher auch zu einer axialen Verschiebung des Verbindungsbolzens (2) führt, der durch die beiden Gerüstelemente (91, 92) hindurch eingreift, und wobei beim Verschrauben der Anschlagabschnitt (53; 66) des Rahmens (5; 6) an einem der beiden Gerüstelemente (91, 92) anliegt, um die Drehung des Rahmens (5; 6) und der Mutter (59; 69) zu blockieren;
- sobald der vergrößerte Kopf (21) des Verbindungsbolzens (2) an einem der beiden Gerüstelemente (91, 92) anliegt, der Schraubendreher (8) in die entgegengesetzte Richtung aktiviert wird, um den distalen Gewindeabschnitt (35) aus der Mutter (59; 69) herauszuschrauben und dann die Montage-/Demontagevorrichtung (11; 12; 13) zu entfernen.

15. Demontageverfahren zum Demontieren eines Verbindungsbolzens (2), der für ein End-zu-End-Zusammenfügen von zwei Gerüstelementen (91, 92) einer Struktur (9), wie zum Beispiel einer Kranstruktur, eingesetzt wird, wobei das Demontageverfahren ein Bereitstellen einer Montage-/Demontagevorrichtung (11; 12; 13) nach einem der Ansprüche 1 bis 10 umfasst, wobei:
- der rohrförmige Verbindungsbolzen (2) durch die beiden übereinanderliegenden Gerüstelemente (91, 92) hindurch montiert ist, um diese zusammenzufügen, und der Verbindungsbolzen (2) ein distales Ende, das mit einem vergrößerten Kopf (21) ausgestattet ist, und ein proximales Ende (22), die einander gegenüberliegen, aufweist, wobei der vergrößerte Kopf (21) auf einer ersten Seite der Struktur (9), zum Beispiel einer Außenseite, angeordnet ist;
- der Rahmen (5; 6) an der Struktur (9) so platziert wird, dass die Mutter (59; 69) auf der ersten Seite der Struktur (9) in Ausrichtung mit dem Verbindungsbolzen (2) angeordnet ist und die Buchse (7) auf der ersten Seite der Struktur (9) am Rahmen (5; 6) montiert und zwischen der Mutter (59; 69) und dem einen der beiden Gerüstelemente (91, 92) eingefügt ist, wobei das erste offene Ende (71) der Buchse (7) den vergrößerten Kopf (21) des Verbindungsbolzens (2) umgibt;
- die Montage-/Demontagestange (3) durch den Verbindungsbolzen (2) und die Buchse (7) geschoben wird und durch diese verläuft, bis der distale Gewindeabschnitt (35) in Kontakt mit der Mutter (59; 69) kommt;
- der Kopf (31) der Montage-/Demontagestange (3) mit einem Aufsatz (80) eines Schraubendrehers (8), zum Beispiel eines Drehschlagschraubers, gekoppelt ist, der sich auf der zweiten Seite der Struktur (9), gegenüber der ersten Seite der Struktur (9), befindet;
- der Schraubendreher (8) aktiviert wird, um den distalen Gewindeabschnitt (35) in die Mutter (59; 69) einzuschrauben, was zu einer axialen Verschiebung des proximalen Anschlags (4) führt, der gegen das proximale Ende (22) des Verbindungsbolzens (2) zum Anliegen kommt, wodurch der Verbindungsbolzen (2) axial in eine Richtung von der zweiten Seite in Richtung der ersten Seite der Struktur (9) gedrückt wird, so dass der Verbindungsbolzen (2) mindestens teilweise aus den beiden Gerüstelementen (91, 92) austritt und gleichzeitig in das Innere der Buchse (7) eintritt;
- sobald der proximale Anschlag (4) gegen das eine der beiden Gerüstelemente (91, 92) anliegt, der Schraubendreher (8) in die entgegengesetzte Richtung aktiviert wird, um den distalen Gewindeabschnitt (35) aus der Mutter (59; 69) herauszuschrauben und dann die Montage-/Demontagevorrichtung (11; 12; 13) zu entfernen.

## Claims

1. A mounting/dismounting device (11; 12; 13) for mounting/dismounting a connecting pin (2) used for an end-to-end assembly of two frame elements (91, 92) of a structure (9), such as a crane structure, said mounting/dismounting device (11; 12; 13) comprising:
- a mounting/dismounting rod (3) having a longitudinal axis (30), a head (31) adapted to cooperate with a screwdriver (8), and a rod body (32) having a proximal portion (33) prolonging the head (31) and a threaded distal portion (35) which terminates in a free end (36);
- a base (5; 6) supporting a nut (59; 69) and having an abutment portion (53; 66) shaped to bear on one of the two frame elements (91, 92), the threaded distal portion (35) being provided to screw into said nut (59; 69) aligned with the longitudinal axis (30);
- a proximal stop (4) mounted freely in rotation on the proximal portion (33) of the rod body (32) around the longitudinal axis (30);
- a bushing (7) which is removable and mounted freely in translation along the longitudinal axis (30) around the rod body (32) between the nut (59; 69) and the proximal stop (4), said bushing (7) having a first open end (71) and a second open end (72);
said mounting/dismounting device (11; 12; 13) being configurable in:
- a mounting configuration in which the bushing (7) is in abutment against the proximal stop (4); and
- a dismounting configuration in which the bushing (7) is in abutment against the base (5; 6) or the nut (59; 69).

2. The mounting/dismounting device (13) according to claim 1, wherein the base (6) comprises a support sleeve (60) aligned with the longitudinal axis (30) and having an open proximal end (61) and a opposite open distal end (62), said support sleeve (60) internally supporting the nut (59; 69), and wherein:
- in the mounting configuration, the nut (69) is blocked in rotation and is guided in translation along the longitudinal axis (30);
- in the dismounting configuration, the nut (69) is blocked in rotation and is blocked in translation along the longitudinal axis (30).

3. The mounting/dismounting device (13) according to claim 2, wherein at least one longitudinal groove (651) is provided on the support sleeve (60), said longitudinal groove (651) extending parallel to the longitudinal axis (30), and the nut (69) is secured to at least one guide pin (64) which, in the mounting configuration, is engaged in the corresponding longitudinal groove (651) to block the nut (69) in rotation and guide the nut (69) in translation along the longitudinal axis (30).

4. The mounting/dismounting device (13) according to claim 2 or 3, wherein the base (6) comprises a holding system (68) mounted on the distal end (62) of the support sleeve (60) and cooperating with the free end (36) of the rod body (32) of the mounting/dismounting rod (3) in the mounting configuration, in order to axially block the rod body (32) along the longitudinal axis (30).

5. The mounting/dismounting device (13) according to any one of claims 2 to 4, wherein the base (6) comprises one or several magnets disposed on the abutment portion (66) to hold by magnetization the base (6) on one of the two frame elements (91, 92).

6. The mounting/dismounting device (11; 12) according to claim 1, wherein the base (5) comprises a cradle (50) having a generally arched shape and provided with a proximal plate (51) and a distal plate (52) facing each other and connected by a spar (53), said spar (53) forming the abutment portion shaped to bear on one of the two frame elements (91, 92).

7. The mounting/dismounting device (11; 12) according to claim 6, wherein the proximal plate (51) and the distal plate (52) respectively comprise a proximal orifice (55) and a distal orifice (56) aligned with the longitudinal axis (30), said distal orifice (56) being secured to the nut (59), and wherein the proximal stop (4) and the bushing (7) are adapted to pass inside the proximal orifice (55) of the cradle (50).

8. The mounting/dismounting device (11; 12) according to claim 6 or 7, wherein the bushing (7) is secured to a radial extension arm (73) adapted to be engaged into a window (58) formed in the spar (53) of the cradle (50), in order to block said bushing (7) in rotation in the dismounting configuration.

9. The mounting/dismounting device (11; 12; 13) according to any one of the preceding claims, wherein the proximal stop (4) is guided in rotation by a running gear (45) mounted around the proximal portion (33) of the rod body (32).

10. The mounting/dismounting device (11; 12; 13) according to claim 9, wherein the running gear (45) is interposed between an annular stop (46), which bears against the head (31) of the mounting/dismounting rod (3), and an inner shoulder provided in the proximal stop (4).

11. A mounting/dismounting system for mounting/dismounting a connecting pin (2) used for an end-to-end assembly of two frame elements (91, 92) of a structure (9), such as a crane structure, said mounting/dismounting system comprising:
- a mounting/dismounting device (11; 12; 13) according to any one of claims 1 to 10; and
- a screwdriver (8), for example an impact driver, provided with a bit (80) capable of cooperating with the head (31) of the mounting/dismounting rod (3), in order to be able to rotatably drive said mounting/dismounting rod (3).

12. An assembly kit for an end-to-end assembly of two frame elements (91, 92) of a structure (9), such as a crane structure, said assembly kit comprising:
- a mounting/dismounting device (11; 12; 13) according to any one of claims 1 to 10; and
- at least one connecting pin (2) adapted to pass through a connecting hole (90) passing through the two superimposed frame elements (91, 92);
wherein the connecting pin (2) has a tubular shape so that the mounting/dismounting rod (3) can pass through it, and the connecting pin (2) has a distal end provided with an enlarged head (21) and a proximal end (22), which are opposite to each other.

13. The assembly kit according to claim 12, wherein the first open end (71) of the bushing (7) is sized to allow the connecting pin (2) to enter at least partially inside said bushing (7), according to a first direction of insertion with the proximal end (22) of the connecting pin (2) which enters the first open end (71) of the bushing (7), and also according to a second direction of insertion with the distal end and enlarged head (21) of the connecting pin (2) entering the first open end (71) of the bushing (7).

14. A mounting method for mounting a connecting pin (2) used for an end-to-end assembly of two frame elements (91, 92) of a structure (9), such as a crane structure, said mounting method comprising a provision of a mounting/demounting device (11; 12; 13) according to any one of claims 1 to 10, wherein:
- the connecting pin (2), of tubular shape, is positioned in a connecting hole (90) passing through the two superimposed frame elements (91, 92), and this connecting pin (2) has a distal end provided with an enlarged head (21) and a proximal end (22) which are opposite to each other, said enlarged head (21) being disposed on a first side of the structure (9), for example an external side;
- the bushing (7) is mounted around the rod body (32), on a second side of the structure (9), opposite to the first side of the structure (9), with its second open end (72) which is placed in abutment against the proximal stop (4);
- the base (5; 6) is set up on the structure (9) with the nut (59; 69) disposed on the first side of the structure (9) in alignment with the connecting pin (2), the enlarged head (21) of which is placed in abutment against the nut (59; 69) or the base (5; 6);
- the mounting/dismounting rod (3) is pressed and passes through the two frame elements (91, 92) and the connecting pin (2) until the threaded distal portion (35) comes into contact with the nut (59; 69) supported by the base (5; 6), and that the bushing (7) bears against one of the two frame elements (91, 92) on the second side of the structure (9);
- the head (31) of the mounting/dismounting rod (3) is coupled to a bit (80) of a screwdriver (8), for example an impact driver, which is located on the second side of the structure (9);
- the screwdriver (8) is activated to screw the threaded distal portion (35) into the nut (59; 69), leading to an axial displacement of the nut (59; 69) in a direction from the first side towards the second side of the structure (9), and therefore also to an axial displacement of the connecting pin (2) which is engaged through the two frame elements (91, 92), and wherein during screwing the abutment portion (53; 66) of the base (5; 6) bears on one of the two frame elements (91, 92) in order to block the base (5; 6) and the nut (59; 69) in rotation;
- once the enlarged head (21) of the connecting pin (2) is in abutment against one of the two frame elements (91, 92), the screwdriver (8) is activated in the opposite direction to unscrew the threaded distal portion (35) out of the nut (59; 69) and then remove the mounting/dismounting device (11; 12; 13).

15. A dismounting method for dismounting a connecting pin (2) used for an end-to-end assembly of two frame elements (91, 92) of a structure (9), such as a crane structure, said dismounting method comprising providing a mounting/demounting device (11; 12; 13) according to any one of claims 1 to 10, wherein:
- the connecting pin (2), of tubular shape, is mounted through the two superimposed frame elements (91, 92) in order to assemble them, and this connecting pin (2) has a distal end provided with an enlarged head (21) and a proximal end (22) which are opposite to each other, said enlarged head (21) being disposed on a first side of the structure (9), for example an external side;
- the base (5; 6) is set up on the structure (9) with the nut (59; 69) being disposed on the first side of the structure (9) in alignment with the connecting pin (2), and with the bushing (7) which is mounted on the base (5; 6), on the first side of the structure (9), and which is interposed between the nut (59; 69) and one of the two frame elements (91, 92), the first open end (71) of the bushing (7) surrounding the enlarged head (21) of the connecting pin (2);
- the mounting/dismounting rod (3) is pressed in and passes through the connecting pin (2) and the bushing (7) until the threaded distal portion (35) comes into contact with the nut (59; 69);
- the head (31) of the mounting/dismounting rod (3) is coupled to a bit (80) of a screwdriver (8), for example an impact driver, which is located on a second side of the structure (9), opposite the first side of the structure (9);
- the screwdriver (8) is activated to screw the threaded distal portion (35) into the nut (59; 69), leading to an axial displacement of the proximal stop (4) which comes into abutment against the proximal end (22) of the connecting pin (2), thus pushing the connecting pin (2) axially in a direction from the second side towards the first side of the structure (9), so that the connecting pin (2) comes out at least partially from the two frame elements (91, 92) while entering inside the bushing (7);
- once the proximal stop (4) is in abutment against one of the two frame elements (91, 92), the screwdriver (8) is activated in the opposite direction to unscrew the threaded distal portion (35) from the nut (59; 69) and then remove the mounting/dismounting device (11; 12; 13).
